(19) Europäisches Patentamt / European Patent Office / Office européen des brevets

(11) **EP 2 369 792 B1**

(12) **EUROPEAN PATENT SPECIFICATION**

(45) Date of publication and mention
of the grant of the patent:
**14.11.2012 Bulletin 2012/46**

(51) Int Cl.:
***H04L 12/56*** *(2006.01)*

(21) Application number: **10157684.1**

(22) Date of filing: **25.03.2010**

(54) **Method for path determination according to adaptation functions**

Verfahren zur Pfadbestimmung in Abhängigkeit von Anpassungsfunktionen

Procédé de détermination de voie d'acheminement en fonction de fonctionnes d'adaptation

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**28.09.2011 Bulletin 2011/39**

(73) Proprietor: **Alcatel Lucent**
**75007 Paris (FR)**

(72) Inventors:
• **Pouyllau, Hélia**
**91620, NOZAY (FR)**

• **Douville, Richard**
**91620, NOZAY (FR)**

(74) Representative: **Sciaux, Edmond et al**
**Alcatel-Lucent International**
**32, avenue de Kléber**
**92700 Colombes (FR)**

(56) References cited:
**EP-A1- 1 895 720     US-B1- 7 092 378**
**US-B1- 7 453 824**

**Description**

FIELD OF THE INVENTION

The present invention relates to a method for building a path between a source node and a destination node, across at least one network system. The invention also relates to a network management for carrying out said method.
Such a method may be used in any network system supporting a plurality of protocol technologies and adaptation functions (i.e. encapsulation and desencapsulation) between them.

BACKGROUND OF THE INVENTION

When a service has to be established (such as for example a data transmission) between a source node and a destination node, an end-to-end path has to be computed satisfying quality of service QoS requirements (e.g. bandwidth superior to a threshold value) expressed by a demand.
A method for building a path between a source node and a destination node in a network system, well-known by the man skilled in the art, is based on quality and cost metric to select a path for sending data from the source node towards the destination node.
Besides, nodes, such as routers, of network systems have often several adaptation functions, so that they can interconnect using different protocol technology (e.g. IP, Ethernet, MPLS, etc.). In a not limited example, possible adaptation functions are: a first protocol encapsulating a second protocol, a first protocol desencapsulating a second protocol, the second protocol encapsulating the first protocol, and the second protocol desencapsulating the first protocol.
Although, it is preferable that the same protocol is used along the path avoiding adding costs of encapsulation, it might not be possible sometimes to satisfy both the QoS requirements meanwhile having the same protocol. Hence, adaptation functions of routers must be used to permit the delivery of a service. Such problems occur particularly when the end-to-end path delivering the service has to be set up across more than one, potentially heterogeneous and independently administrated, networks, see also document EP-A1-1895720.
One problem of the well-known prior art is that the building method of the prior art doesn't address the problem of building a path under such adaptive constraints, which may lead to unfeasible paths because of some adaptation functions which could not match along the path. Hence, both nodes can't communicate together using their protocol technologies.

SUMMARY OF THE INVENTION

It is an object of the invention to provide a method for building a path between a source node and a destination node, across at least one network system, which permits to build a valid path, i.e. which respects said adaptation function compatibilities, said path being optimal because of the use of an objective function.
To this end, there is provided a method for building a path between a source node and a destination node, across at least one network system, under adaptation function compatibility constraint, said method comprising the steps of:

- generating a first set of paths available between said source node and said destination node; and
- for a determined number of cycles :

  - evaluating each path of the set of paths according to at least one associated constraint which is defined by adaptation function compatibility, said evaluation setting an objective function value to each path according to an objective function and constraint satisfactions;
  - sorting the evaluated paths according to said associated objective function values;
  - constructing a second set of paths to be evaluated by :

    - initializing said second set of paths using a determined factor applied to the set of the evaluated paths;
    - while said second set of paths comprises a size different from the size of the first set of paths:

      - creating a new path based on a recombination of a pair of paths, said pair being retrieved from a group whose paths have at least one common node;
      - carrying-out a change of at least one node or edge of said new created path with one alternative node or edge which has the maximal objective function value;
      - adding said new created path to the second set of paths;

- updating said first set of paths with said second set of paths;

- selecting an optimal path among said set of paths according to the maximal objective function value.

As we will see in further details, because the constraint takes into account the adaptation function compatibility during the evaluation of a path, this will lead to find some valid paths. The construction step leads to explore a plurality of solutions within the valid paths. Then, the use of an objective function permits to select an optimal path among the valid paths which have been built.

In a first not limited embodiment, at least one label is associated to each edge or each node of a generated path, said label(s) belonging to an alphabet representing protocol technologies and adaptation functions supported by edges and/or nodes of the network system, and wherein it comprises the further steps of:

- updating a set of words associated to each generated path, each word being a sequence of label(s) generated using the label(s) of said path nodes and/or edges; and
- during the change, updating the associated set of words with label(s) of the modified new path.

In a second not limited embodiment, the method comprises a further step of selecting an optimal word of the optimal path according to a selection function. It permits to define a criterion for an optimal word in order to select the adaptation functions to apply with the selected path.

In a third not limited embodiment, the constraint of adaptation function compatibility is checked according to an adaptation function checking, said adaptation function checking being based on the set of words associated to said path.

In a fourth not limited embodiment, the change comprises a step of selecting at least one node or edge according to a weight defined by a number of alternative nodes or edges a node or edge has. It increases the probability to perform the change.

In a fifth not limited embodiment, the alternative node or edge which leads to at least one valid word associated to the path is selected.

It permits to increase the probability of having a feasible path in terms of adaptation function compatibility.

In a sixth not limited embodiment, the step of evaluating the paths generated is further performed according to quality of service constraints.

It permits to take into account QoS constraints as well as adaptiveness constraint.

In a seventh not limited embodiment, wherein the objective function is defined by at least one quality of service parameter.

It permits to treat QoS requirements as selection criteria thus leading to more feasible paths than treating them as constraints.

In an eighth not limited embodiment, the objective function is defined by the lowest number of adaptation functions per word associated to a given path.

It permits to treat adaptation function compatibility as a selection criterion and select jointly the path and the optimal combination of compatible adaptation functions to use.

In a ninth not limited embodiment, the creation of a new path comprises the sub-steps of:

- identifying groups of evaluated paths, said groups being distinct from each other by at least one common node the paths belonging to a group have ;
- among said groups of evaluated paths, selecting a group of paths which have at least one node in common ;
- selecting a pair of paths within a group of paths whose paths have at least one common node ; and
- creating a new path using the node(s) and edge(s) between the source node(s) and the common node of a path of the pair of paths, and using the node(s) and the edge(s) between the common node and the destination node of the other path of the pair of paths.

In a tenth not limitative embodiment, the adaptation function checking uses a push-down automaton, said push-down automaton comprising a stack and associated stack commands, said alphabet, states and transitions which are associated to the labels of the alphabet and stack commands. The adaptation function checking may be dynamically set up and thus the push-down automaton may evolve in the same time as the alphabet evolves;

In an eleventh not limitative embodiment, the adaptation function checking comprises the sub-steps of:

- launching a push-down automaton for reading a word associated to a path built between a source node and an another node, a word comprising labels of the alphabet, a label of a word being associated to an edge or a node of the built path; and

- validating the built path according to the result of the reading of the word, said validation comprising the sub-steps of:

  - when the word has been read entirely and the another node is different from a destination node, validating the path being built with the adaptation functions corresponding to the word read;
  - when the word has been read entirely and the another node is equal to a destination node:

    - if the source node and the destination node are of homogeneous protocol technologies and if the stack is empty, validating the path with the adaptation functions corresponding to the word read;
    - if the source node and the destination node are of heterogeneous protocol technologies and if the stack comprises a label representative of an adaptation function, validating the path with the adaptation functions corresponding to the word read.

It is a simple way to verify adaptation functions. And, it permits to verify adaptation functions of an intermediate path, and adaptation functions of a final path.

In a twelfth not limited embodiment, the push-down automaton comprises:

- the stack and associated stack commands;
- the alphabet of labels representing protocol technologies and adaptation functions supported by edges and/or nodes of a network system ;
- states and transitions which are associated to the labels of the alphabet and stack commands;

and is able to:

- read a label forming said word;
- check if there is a transition associated to the label read;
- if an associated transition exists :

  - activate stack commands on the stack according to conditions associated to the transition;
  - go to the egress state of the transition; and
  - iterate the preceding steps with the next label of the word.

The push-down automaton permits to check a word, fill in the stack, for a further validation/invalidation of the word.
In addition, there is provided a network management element for building a path between a source node and a destination node, across at least one network system, under adaptation function compatibility constraint, a path comprising a sequence of nodes and edges, said network management element being able to:

- generate a first set of paths available between said source node(s) and said destination node ; and
- for a determined number of cycles:
- evaluating each path of the set of paths according to at least one associated constraint which is defined by adaptation functions compatibility, said evaluation setting an objective function value to each path according to an objective function and constraint satisfactions;
- sorting the evaluated paths according to said associated objective function values ;
- constructing a second set of paths to be evaluated by :

  - initializing said second set of paths using a determined factor applied to the set of evaluated paths ;
  - while said second set of paths comprises a size different from the size of the first set of paths :

    - creating a new path based on a recombination of a pair of paths, said pair being retrieved from a group whose paths have at least one common node ;
    - carrying-out a change of at least one node or edge of said new created path with one alternative node or edge which has the maximal objective function value;
    - adding said new created path to the second set of paths ;

  - updating said first set of paths with said second set of paths ;

- selecting an optimal path among said set of paths according to the maximal objective function value.

In addition, there is provided a computer program product for a computer, comprising a set of instructions, which when loaded into said computer, causes the computer to carry out the method according to the characteristics above-mentioned.

BRIEF DESCRIPTION OF THE FIGURES

Some embodiments of methods and/or apparatus in accordance with embodiments of the present invention are now described, by way of example only, and with reference to the accompanying drawings, in which:

- Fig.1 illustrates a schematic network system comprising a source node and a destination node, where the method for building a path between said nodes according to the invention is to be used;
- Fig.2 illustrates a schematic organization chart of the method for building a path according to a not limited embodiment of the invention;
- Fig.3 illustrates schematically the details of an evaluation sub-step of a step of constructing an optimum set of paths of the method of Fig. 2;
- Fig.4 illustrates schematically the details of a recombination sub-step of a step of constructing an optimum set of paths of the method of Fig. 2;
- Fig.5 illustrates schematically a not limited example of path recombination performed by the recombination sub-step of Fig. 4;
- Fig.6 illustrates schematically the details of a change sub-step of a step of constructing an optimum set of paths of the method of Fig. 2;
- Fig.7 illustrates a schematic example of a part of a network;
- Fig.8 illustrates a schematic diagram of an adaptation function checking used by the method for building a path of Fig. 2;
- Fig.9 illustrates a schematic diagram of a push-down automaton used by the adaptation function checking of Fig. 4;
- Fig.10 illustrates a detailed schematic organization chart of the adaptation function checking of Fig. 4;
- Fig.11 illustrates a schematic network system comprising network management elements which perform the building method of Fig. 2
- Fig.12 illustrates a schematic network system comprising network management elements which perform the method for building a path of Fig. 2 to Fig; 6 and which perform the adaptation function checking of Fig. 9 to Fig. 10; and
- Fig.13 illustrates a schematic network system comprising network management elements which perform the method for adaptation checking and the push-down automaton of Fig. 8 to Fig. 10.

DESCRIPTION OF EMBODIMENTS OF THE INVENTION

In the following description, well-known functions or constructions by the man skilled in the art are not described in detail since they would obscure the invention in unnecessary detail.

The present invention relates to a method for building a path between a source node and a destination node, across at least one network system, under adaptation functions.

As we will see below, said method permits:

- to build a plurality of paths with respect to adaptation function compatibilities and possibly other Quality of Service (QoS) constraints (e.g. threshold over end-to-end transmission delay, minimal bandwidth to guarantee, etc.); and
- to select a path using an objective function, which is an input parameter of said method and gives a definition of the selection criterion to use in order to select the path among the valid built paths.

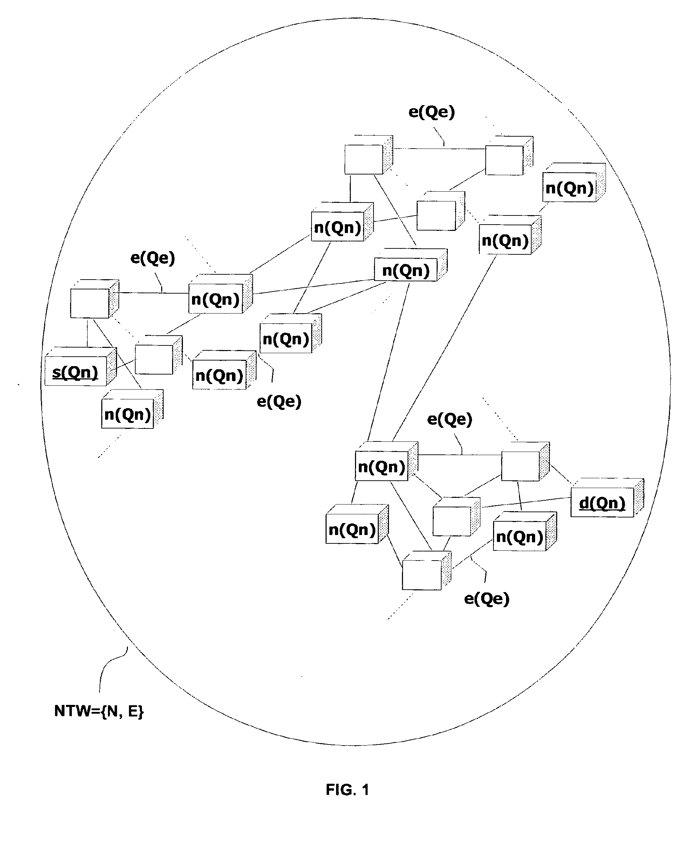

A network system NTW={N, E}, as illustrated in Fig.1 is composed of a set of nodes N and a set of edges E representing in a not limited example routers and links respectively.

Each node n is associated to:

- a set of quality of service parameter values, called QoS parameters Q(n). In not limited examples, QoS parameters associated to a node are the availability of the node, the number of data packet lost on a node, a security level on a node, etc.
- an objective function value $\varphi v(n)$. In a not limited embodiment, if the objective function $\varphi$ captures a set of QoS parameters values, Q(n), then $\varphi v(n)$ is a weighted sum over these parameters. It permits to give more or less weigh to a parameter.

Each edge e belonging to the set of edges E is associated to:

- a set of QoS parameter values, Qe. In not limited examples, QoS parameters associated to an edge are the total bandwidth capacity of the edges, the consumed bandwidth of the edge, the delay between its ingress and egress nodes, the jitter which is the delay variation between its ingress and egress nodes, etc.
- an objective function value $\varphi v(e)$.

It is to be noted that the adaptation functions are supported by nodes and/or edges of the network system NTW, depending of a choice of model taken for the network system NTW.

It is also to be noted that a built path $\pi$ is a sequence of edges e and nodes n between the source node s and the destination node d.

The nodes n described in a not limited example are routers. Thus, when a router s (called a source node or here a source router) wants to transmit some data or deliver a service to a router d (called a destination node or here a destination router), a method M for building a path between the source node s and the destination node d is used.

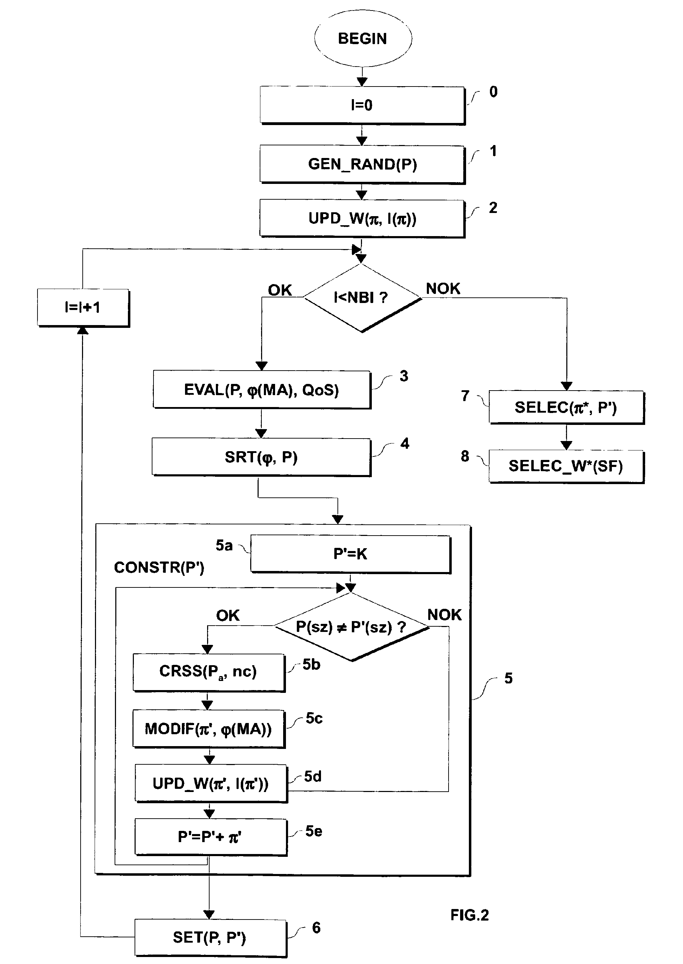

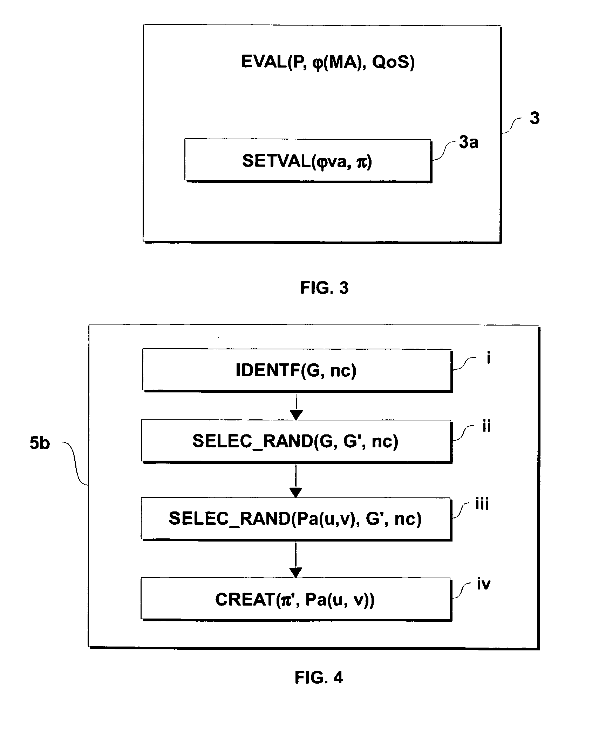

The method M for building a path $\pi$ between a source node s and a destination node d, across at least one network system NTW, under adaptation functions, comprises the following steps as illustrated in Fig. 2 and Fig. 3:

- generating a first set of paths P available between said source node s and said destination node d, (step GEN_ RAND(P) as illustrated in Fig. 2) ; and
- for a determined number of cycles NBI :

  - evaluating each path $\pi$ of the set of paths P according to at least one associated constraint cst which is defined by adaptation functions compatibility, said evaluation setting an objective function value $\varphi va$ to each path $\pi$ according to an objective function $\varphi$ and constraint cst satisfactions (step EVAL(P, $\varphi$(MA), QoS) as illustrated in Fig. 2) ;
  - sorting the evaluated paths P according to said associated objective function values $\varphi va$ (step SRT($\varphi$, P) as illustrated in Fig. 2) ;
  - constructing a second set of paths P' to be evaluated by (step CONSTR(P') as illustrated in Fig. 2) :
  - initializing said second set of paths P' using a determined factor K applied to the set of evaluated paths P (sub-step 4a as illustrated in Fig. 2) ;
  - while said second set of paths P' comprises a size different from the size of the first set of paths P :

    - creating a new path $\pi'$ based on a recombination of a pair of paths $P_a$, said pair being retrieved from a group G' whose paths have at least one common node nc (step CRSS ($P_a$, nc) as illustrated in Fig. 2 and Fig. 3) ;
    - carrying-out a change of at least one node n or edge e of said new created path $\pi'$ with one alternative node n* or edge e* which has the maximal objective function value $\varphi v(n)$, $\varphi v(e)$ (step MODIF($\pi'$, $\varphi$(MA)) as illustrated in Fig. 2 and 3) ;
    - adding said new created path $\pi'$ to the second set of paths P' (step 5f as illustrated in Fig. 2) ;

  - updating said first set of paths P with said second set of paths P' (step SET(P, P') as illustrated in Fig; 2) ;

- selecting an optimal path $\pi*$ among said set of paths P according to the maximal objective function value $\varphi va$ (step SELEC($\pi*$,P*) as illustrated in Fig. 2).

Hence, said building method has the following input parameters:

- at least one constraint cst which constrains the selected path to be compatible in the meaning of adaptation function compatibility;

- an objective function allowing to select a path among the set of built paths;

- an integer indicating the number of paths to generate;

- an integer indicating the number of cycles NBI to perform, which influences the quality of response of said method;

In a not limited embodiment, said building method has furthermore the following input parameters:

- a set of quality of service constraints, called QoS constraints, which are thresholds over specific QoS parameters (the delay, the bandwidth, the packet-loss, the jitter, etc.), which are given by a customer who sends a request to deliver a service or to send some data over the network system from the source node s to the destination node d.

- A selection function SF in order to choose, for a given path, an optimal adaptation function combination.

In a not limited embodiment, at least one label $1(\pi)$ is associated to each edge or each node of a generated path $\pi$, said label(s) belonging to an alphabet $\Sigma$ representing protocol technologies tck and adaptation functions supported by edges and/or nodes of the network system NTW, and wherein the building method M comprises the further steps of :

- updating a set of words W associated to each generated path $\pi$ , each word being a sequence of label(s) generated using the label(s) $1(\pi)$ of said path $\pi$ nodes and/or edges (step UPD_W($\pi$,1($\pi$))); and
- during the change, updating the associated set of words W with label(s) $1(\pi)$ of the modified new path $\pi'$ (step UPD_W($\pi'$, I($\pi'$))).

In the following description, protocols such as MPLS ("Multiprotocol Label Switching ") labeled "m" and Ethernet, labeled "e", are taken into a not limited example. The associated adaptation functions are:

- MPLS over Ethernet, labeled "moe", where the MPLS protocol is encapsulated in the Ethernet protocol ;
- Ethernet over MPLS, labeled "eom", where the Ethernet protocol is encapsulated in the MPLS protocol;
- Ethernet from MPLS, which is the inverse adaptation function of "moe", labeled "edm", where the Ethernet protocol is desencapsulated in the MPLS protocol ;
- MPLS from Ethernet, which is the inverse adaptation function of "eom", labeled "mde", where the MPLS protocol is desencapsulated from the Ethernet protocol.

Therefore, a set of labels I($\pi$) representing the adaptation functions supported by a node is associated to each node n.

In a not limited embodiment, a set of labels I($\pi$) representing the adaptation functions supported by an edge is further associated to said edge.

In a not limited embodiment, as illustrated in Fig. 2, the method M comprises a further step of selecting an optimal word $\omega^*$ of the optimal path $\pi^*$ according to a selection function SF (step SELEC_W*(SF) as illustrated in Fig. 2).

In a not limited embodiment, the change comprises a step of selecting at least one node n or edge e according to a weight We defined by the number of alternative nodes or edges a node or edge has (step SETVAL( $\varphi$va, $\pi$) as illustrated in Fig. 3).

In a not limited embodiment, as illustrated in Fig. 3, the creation of a new path $\pi'$ comprises the sub-steps of:

- identifying groups G of evaluated paths P, said groups being distinct from each other by at least one common node the paths belonging to a group have (step IDENTF(G, nc)) ;
- among said groups G of evaluated paths P, selecting a group G' of paths $p_g{}^*$ which have at least one node n in common (step SELEC_RAND(G, G', nc));
- selecting a pair $P_a$ of paths u , v within a group G' of paths whose paths have at least one common node nc (step SELEC_RAND($P_a$ (u, v), G', nc)); and
- creating a new path $\pi'$ using the node(s) N and edge(s) E between the source node s and the common node nc of a path u of the pair of paths $P_a$ and node(s), and using the edge(s) e between the common node nc and the destination node d of the other path v of the pair of paths $P_a$ (step CREAT($\pi'$, $P_a$ (u, v)).

The building method M is described in details below.

In the following description, in the not limited embodiment described, the building method comprises the further steps above-mentioned.

Reference to Fig. 2, 3 and 4 will be made.

As we will see, an objective function permits to select a path which is optimal, whereas a constraint limits the domain of solutions where a path may be selected and constrains to build some paths which are valid according to said constraint.

**In an initialization step 0),** as illustrated in Fig. 2, one initializes a first counter I to zero which permits to count the number of cycles NBI where a part of the building method is performed.

**In a first step 1)**, as illustrated in Fig. 2, one generates a first set of paths P available between said source node s and said destination node d.

It is to be noted that the paths generated are end-to-end paths, also called final paths, as they are paths from the source node s to the destination node d.

In a not limited embodiment, this step generation is random. It permits to generate some paths P among all the possible paths between said source node s and said destination node d without quality of service constraints or adaptation function constraints. Random algorithms are well known by the man skilled in the art, therefore, they won't be described here.

As described above, in a not limited embodiment, at least one label 1($\pi$) is associated to each edge or each node of said path $\pi$, said label(s) belonging to an alphabet $\Sigma$ representing protocol technologies tck and adaptation functions supported by edges and/or nodes of the network system NTW.

In a not limited embodiment, a set of labels l($\pi$) representing the adaptation functions supported by an edge is further associated to said edge.

**In a second step 2),** as illustrated in Fig. 2, one updates a set of words W associated to each generated path $\pi$, each word being a sequence of label(s) generated using the label(s) 1($\pi$) of said path $\pi$ nodes and/or edges.

It is to be noted that as a path $\pi$ built between a source node s and the destination node d is a sequence of edges e and nodes n between these two nodes, a word $\omega(\pi)$ is built using the labels l($\pi$) on the edges and/or the nodes belonging to said path $\pi$. Since a plurality of adaptation functions may be associated to a node and/or an edge, a path $\pi$ might lead to a set of words W (comprising more than one word). Each word $\omega(\pi) \in$ W represents a sequence of labels l($\pi$). The set of words W is the enumeration of all distinct label sequences generated using a path built $\pi$.

Hence, a word $\omega(\pi)$ comprises one label 1($\pi$) of each node n of a path $\pi$ taken successively from the source node s to the destination node d.

In a not limited example, if a path $\pi$ comprises six nodes s, ni1, ni2, ni3, ni4, d, all having the labels 1($\pi$) : m, moe, eom, mde, edm, e; among the possible words, two words ($\omega$1, $\omega$2 are built. These two words compose the set of words W and W = {$\omega$1 = (m, moe, eom, mde, edm, m) ; $\omega$2= (m, moe, eom, mde, e, e)}. It is to be noted that other possible words may be : $\omega$3 = (m, moe, edm, mde, edm, m); $\omega$4= (m, moe, edm, mde, e, e) etc.

Then, for a determined number of cycles NBI (while I < NBI), one performs the following steps.

In a not limited embodiment, the determined number of cycles NBI is at least equal to two.

It is to be noted that this number of cycle NBI is an input parameter that can be acquired in an empirical manner.

It is also to be noted that a high number of cycles increases the chance to converge to an optimal path, said optimality being determined according to an objective function.

**In a third step 3)**, one evaluates each path $\pi$ of the set of paths P according to at least one associated constraint cst which is defined by adaptation function compatibility, said evaluation setting an objective function value $\varphi$va to each path $\pi$ according to an objective function $\varphi$ and constraint cst satisfactions.

In a not limited embodiment, the constraint cst of adaptation function compatibility is checked according to an adaptation function checking MA, said adaptation function checking being based on the set of words W associated to said path $\pi$.

Hence, considering the example above, the word $\omega$2 would not be valid but the word $\omega$1 would, thus leading to an associated path $\pi$ to have a positive objective function value $\varphi$va.

It is to be noted that said adaptation function checking MA uses a push-down automaton AUT, said push-down automaton AUT comprising a stack STK and associated stack commands $\Phi$, said alphabet $\Sigma$, states st and transitions tr which are associated to the labels l($\pi$) of the alphabet $\Sigma$ and stack commands $\Phi$.

Said push-down automaton AUT will be described later in the description.

It is to be noted that the push-down automaton AUT returns a number of words NBW validated for a path.

A set of words W validated means that the adaptation functions (within said set of words) associated to each node and/or edge of a path match altogether along said path: they are compatible.

Hence, the number of words is taken as an adaptive constraint cst.

Hence, the step of evaluating each path generated P is performed according to a number of words validated.

In a not limited embodiment, the step of evaluating each path generated P is further performed according to quality of service QoS constraints.

• Constraint

In a first not limited embodiment, the constraint cst requires that the number of valid words TNBW (taken as a threshold) associated to a path is superior or equal to 1.

In a second not limited example, the constraint cst is a quality of service QoS constraint.

About QoS constraints, an end-to-end path has to be built with respect to end-to-end QoS requirements Qr which defined the QoS constraints. Each QoS requirement qr of Qr is a numerical value representing an end-to-end threshold over a given QoS parameter (e.g. delay). They are settled by a customer who wants to deliver a service or send some data from the source node s to the destination node d. Thus, said QoS requirements define QoS constraints as input parameter of the building method M.

In not limited examples, an end-to-end QoS requirement (or QoS constraint) can be checked using the cumulative value of its corresponding QoS parameter over the nodes or edges that belong to an end-to-end path. Such a parameter can be the number of nodes in the path, the delay (the delay from the source node to the destination node), the node packet-loss, the jitter, etc.. Such end-to-end QoS parameter may be identified by a normalized index or characters id(qr), in not limited examples.

In another not limited example, a QoS constraint over a bandwidth parameter can be checked using each value of said bandwidth parameter over each edge that belong to an end-to-end path.

It is to be noted that the value of a corresponding QoS parameter is often determined by a material constraint due to the equipment used.

In a not limitative first example, a QoS constraint cst over a QoS parameter which is the end-to-end delay is, for a given path:

$$Sum\ (the\ edges'\ delays) <= 100\ ms$$

In a not limitative second example, a QoS constraint cst over the bandwidth parameter would be expressed as, for instance:

$$Min\ (bandwidth\ of\ path's\ edges\ ) >= 1\ GHz$$

• Objective function

It is to be noted that an objective function $\varphi$ is to be maximized or minimized. In the description below, one will use a maximized objective function. Transforming an objective function, which has to be minimized into an objective function which has to be maximized, is a trivial operation well-known by the man skilled in the art. We assume that such a transformation is realized prior to the method execution.

Hence, during the evaluation of a given path, one keeps the objective function value $\varphi va$ to represent said objective function when the path satisfies all the constraints cst (defined as an input parameter) or one takes the opposite value —$\varphi va$ when the path does not satisfy at least one input constraint cst.

It is to be noted that the objective function value $\varphi va$ is computed by accumulation of the objective function values $\varphi v$ (n) and $\varphi v(e)$ respectively on the nodes n and edges e of a given path.

In the schematic example taken, a maximal objective function value in term of bandwidth is the maximal cumulative bandwidth.

In the schematic example taken, a minimal objective function value in term of

- cost is the lowest cumulative cost;
- delay is the lowest cumulative delay.

In a first not limited embodiment, the objective function $\varphi$ is defined by the lowest end-to-end delay associated to a given path.

As this objective function has to be minimized, it is transformed to obtain a maximized objective function.

In a second not limited embodiment, the objective function $\varphi$ is defined by the lowest number of adaptation function of the smallest word associated to a path. It permits to select the path which has less adaptation functions.

In a third not limited embodiment, the objective function $\varphi$ is defined by at least one quality of service QoS parameter Qn, Qe.

When the objective function $\varphi$ is defined using a plurality of QoS parameters, the objective function value $\varphi va$ associated to a path is the cumulative objective values $\varphi v(n)$, $\varphi v(e)$ of each node and edge of said path. Then the cumulative values of the QoS parameters associated nodes and/or edges (some QoS parameters are associated exclusively to nodes or edges, for instance the bandwidth is associated to edges, while other can be associated to both, e.g. delay) is either maximized (e.g. bandwidth) or minimized (e.g. delay).

In a first not limitative example, if an objective function uses the end-to-end delay, as this objective function has to be minimized (the lowest the cumulative delays is, the faster a transmission of data is performed via a path), it would be formulated as:

    Max (-Sum of the edges' delays)

In a second not limitative example, an objective function using the bandwidth would be formulated as,

    Max (bandwidth of path's edges)

If the cumulative QoS value (which is composed of all the QoS delays value associated to each edge of the generated path) respects the constraint cst, then $\varphi va$ = - weighted sum over cumulative QoS values, otherwise one keeps $\varphi va$= weighted sum over cumulative QoS values.

Of course, an objective function may be a combination of a plurality of optimization criteria. In this case, said optimization criteria which are to be maximized or minimized are normalized in order to have a normalized real objective function value $\varphi va$.

**In a fourth step 4),** one sorts the evaluated paths P according to said associated objective function values $\varphi va$. One uses the objective function values $\varphi va$ obtained from the previous step sub-step.

Hence in a not limited example, one sorts said paths depending whether the objective function $\varphi$ has been maximized or minimized.

Since the objective function $\varphi$ has been maximized, one sorts from the greatest objective function value $\varphi$ to the lowest one. The optimum path is the one corresponding to the first value in the sorting list.

**In a fifth step 5)**, one constructs a second set of paths P' to be evaluated.

This step comprises the sub-steps of, as illustrated in Fig. 2 to 7:

**In a first sub-step 5a)**, one initializes said second set of paths P' using a determined factor K applied to the set of evaluated paths P.

It permits to keep a percentage of the best evaluated paths P while constructing the other.

It is to be noted that the best evaluated paths K*P which are kept are the first K*P evaluated paths in the sorted list obtained in the previous step 4).

In a not limited embodiment, the factor K is equal to 20%.

In the further sub-steps below, while said second set of paths P' comprises a size different from the size of the first set of paths P, one will apply on the evaluated set of paths P two different main modifications in order to complete the second set of paths P'.

- The first modification, which may be called a recombination referenced CRSS($P_a$, nc) in Fig. 2, where from a pair of paths which may be called parents, one produces a child path comprising edges and nodes acquired from both parents.

  It permits to generate a new path based on paths which fulfill the constraints.

- The second modification, which may be called a "change" referenced MODIF($\pi$', $\varphi$(MA)) in Fig. 2, where within a child path, an edge and/or a node is replaced by another one in order to preserve and introduce diversity. It prevents the population of nodes and/or edges from becoming too similar to each other, thus slowing down or even stopping the exploration of new paths.

  These sub-steps are described below.

• Recombination

**In a second sub-step 5b)**, one creates a new path $\pi$' based on a recombination of a pair of paths $P_a$, said pair being retrieved from a group G' whose paths have at least one common node nc.

Said sub-step comprises the following steps as illustrated in Fig. 4.

*In a first step i)* referenced IDENTF(G, nc), one identifies groups G of evaluated paths P, said groups being distinct from each other by at least one common node the paths belonging to a group have.

It is to be noted that the nodes and edges of each evaluated paths P are known by the network NTW.

In a not limited embodiment, in order to identify the groups G, one begins with the evaluated path $\pi$ which has the greatest number of nodes, and one applies an exploration and comparison algorithms well-known by the man skilled in the art.

It permits to faster identify the groups G.

*In a second step ii),* referenced SELEC_RAND(G, G', nc), among said groups G of evaluated paths P, one selects a group G' of paths $\pi_{g'}$ which have at least one node n in common.

In a not limited embodiment, the selection of a group G' of paths $\pi_{g'}$ within the groups G is identified randomly.

In another not limited embodiment, the selection of a group G' is performed according to a non previous selection or to a maximum previous selection of said group G'. Hence, a selected group G' is different from a last selected group G' in another loop.

Of course, both embodiments may be combined together.

*In a third step iii)* referenced SELEC_RAND($P_a$(u, v), G', nc), one selects a pair $P_a$ of paths u , v within said group G' of paths whose paths $\pi_{g'}$ have at least one common node nc.

In a first not limited embodiment, the selection of said pair of paths $P_a$ within a group G' is random. It permits to improve the paths exploration in term of diversity of paths.

It is to be noted that the random choice of a group G' and/or of a pair of paths $P_a$ avoids choosing the same groups and same pair of paths from one cycle l to another one. Thus different solutions are explored.

It is to be noted that random algorithms are well-known by the man skilled in the art and therefore won't be described here.

In a second not limited embodiment, the selection of a pair of paths $P_a$ within said group G' is performed according to the maximal objective function value φva. It permits to choose the pair of paths which has the maximal objective function value among other pairs.

Hence the pair of paths $P_a$ are the ones having the maximal objective function values φva of the paths $\pi_{g'}$ of said group G'.

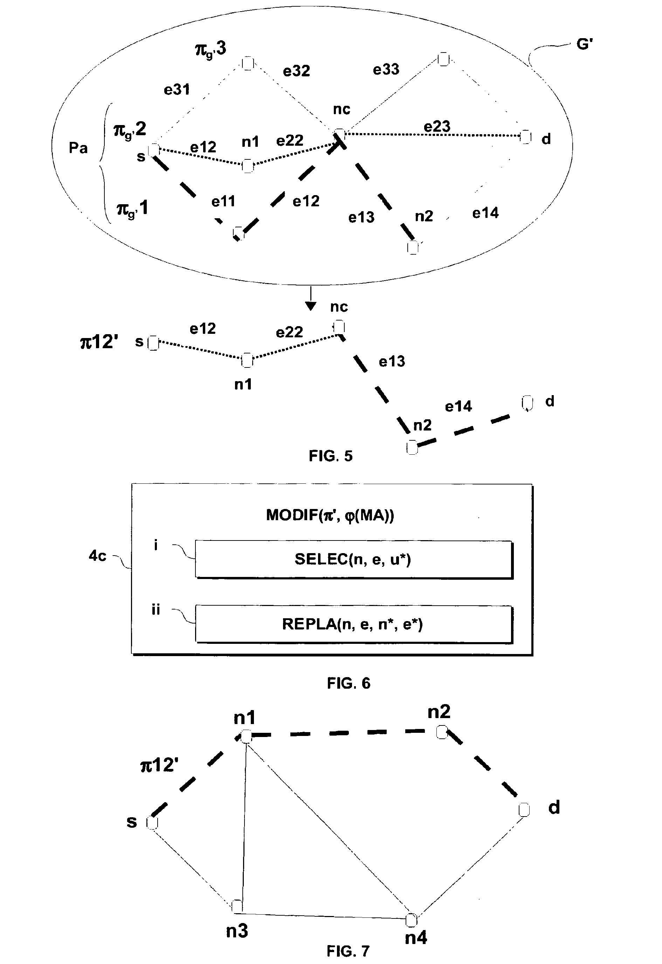

*In a fourth step iv)* referenced CREAT($\pi'$, $P_a$(u, v)), one creates a new path $\pi'$ using the node(s) N and edge(s) E between the source node s and the common node nc of a path u of the pair of paths $P_a$, and using the node(s) N and the edge(s) E between the common node nc and the destination node d of the other path v of the pair of paths $P_a$. In Fig. 5, a not limited schematic example of a group G' is illustrated. Said group G' comprises three paths $\pi_{g'}$,1, $\pi_{g'}$2, $\pi_{g'}$3 which have all one node in common nc. The pair of paths $P_a$ selected comprises the two paths u=$\pi$1 and v=$\pi$2. The new created path $\pi_{12}'$ is composed of:

- the intermediate path which comprises the nodes s-n1 and the edges e12-e22 of the second path $\pi_{g'}$2; and
- the intermediate path which comprises the nodes nc-n2-d and the edges e13-e14 of the first path $\pi_{g'}$1.

• <u>Change</u>

**In a third sub-step 5c)**, one carries-out a change of at least one node n or edge e of said new created path $\pi'$ with one alternative node n* or edge e* which has the maximal objective function value φv(n), φv(e) (MODIF($\pi'$, φ(MA) as illustrated in Fig. 3).

Said sub-step comprises the following steps as illustrated in Fig. 6.

*In a first step i)* referenced SELEC(n, e, u*), one selects at least one node n and/or edge e during the change which is to be replaced.

It is to be reminded that said node and/or edge is selected from the new created path.

In a not limited example, one uses an encoding of the nodes N of the network NTW, here an encoding table, which attributes for each node:

- the type of the node (source, intermediate, destination) of the network NTW;
- the associated labels l($\pi$);
- the optimization criterion/criteria of the associated objective function φ ;
- the list of its connections node(s) nx; and
- for each connection node nx, the optimization criterion/criteria of the associated objective function φ.

Hence, according to this encoding:

- the type of the source node s =0
- the type of an intermediate node ni = 1
- the type of the destination node d = 2

Fig. 7 is a schematic figure which permits to explain the encoding. It illustrates schematically a part of the network NTW, which comprises the new created path $\pi12'$ (s- n1-n2 illustrated in hyphens) and other paths, some of which going through nodes n3 and n4 illustrated.

The objective function of each node comprises the following optimization criterion.

oc1 = a delay (of transmission within a node)

oc2 = a bandwidth

oc3 = cost

Hence, the encoding table is as following.

| n | Node type/ I($\pi$)/oc1/oc2/oc3 | nx/oc1/oc2/oc3 | nx/oc1/oc2/oc3 | nx/oc1/oc2/oc3 |
|---|---|---|---|---|
| s | 0/{m,e}/0/1/1 | n1/1/1/2 | n3/1/1/2 | |
| n1 | 1/{m}/0/1/1 | n2/1/1/2 | n3/1/1/2 | n4/1/1/1 |
| n2 | 1/{m}/0/1/1 | n1/1/1/2 | d/1/1/2 | |
| n3 | 1/{m}/0/1/1 | n1/1/1/2 | n4/1/1/2 | |
| n4 | 1/{m}/0/1/1 | n1/1/1/2 | n3/1/1/2 | d/1/1/2 |
| d | 2/{m}/0/1/1 | | | |

In a not limited embodiment, the selection of at least one node n or edge e (of the new created path $\pi$') is performed according to a weight We defined by the number of alternative nodes n* or edges e*, a node n or edge e has. It increases the probability to perform the change.

The more a node n has alternative nodes, the greater the weight We is.

It is to be noted that the source node s and the destination node n are not taken into account.

It is to be noted that an alternative node n* is a node which has a common preceding node with the selected node n, and an alternative edge e* is an edge which has an ingress node in common with the selected edge e.

Hence, the associated weight We for the nodes in the schematic example above illustrated in Fig. 7 are:

| N | We |
|---|---|
| n1 | 1 |
| n2 | 2 |
| n3 | 1 |
| n4 | 2 |

In this case, the node n2 in the new created path $\pi$12' is selected to be replaced.

In a *second step ii)* referenced REPLA(n, e, n*,e*), one replaces the selected node n or edge e with one of the alternative node n* or e* which has the maximal objective function value $\varphi v(n)$, $\varphi v(e)$).

In a not limited embodiment, the alternative node n* or edge e* which leads to at least one valid word $\omega$ associated to the path $\pi$' is selected to replace the selected node (here n2).

It means that said alternative node n* comprises at least one adaptation function which is compatible with the adaptation functions of its preceding nodes. It is to be noted that in this case, an adaptation function checking MA is performed on an intermediate path (from the source node s to said alternative node n*). The labels I($\pi$) in the encoding of the nodes are used by said adaptation function checking MA.

Therefore, the alternative node n* or edge e* with the maximal objective function value $\varphi v(n)$ or $\varphi v(e)$ and with at least one valid word $\omega$ is used.

Hence, with this change step, one obtains a modified new path $\pi$'.

**In a fourth sub-step 5d)**, one updates an associated set of words W with label(s) I($\pi$) of the modified new path $\pi$'. The encoding table where labels I($\pi$) associated to each node and/or edge of the modified new path $\pi$' may be found is used.

**In a fifth sub-step 5e)**, one adds said new created path $\pi$' to the second set of path P' (said new created path $\pi$' coming from the recombination and the change).

It is to be noted that the sub-step 5b) to 5e) are iterated until said second set of paths P' comprises the same size than the size of the first set of paths P.

Then the following step is performed.

**In a sixth step 6)**, one sets said first set of paths P with the second set of paths P'.

Therefore, said new first set of paths P will be evaluated in its turn.

The steps 3) to 6) are therefore iterated with said new first path P.

It is to be reminded that the steps 3, 4, 5 and 6 above-described are performed for a determined number of cycles NBI (until I=NBI). This loop permits to explore a plurality of paths. Hence, at the end of this loop, one obtains a first set of paths P which respects the constraints cst and which lead to a feasible path $\pi$ according to adaptation functions. Hence, one converges to plurality of feasible paths. Said feasible paths are also called valid paths, each of them having an associated set of words W.

**In a seventh step 7)** referenced SELEC($\pi$', P') illustrated in Fig. 2, one selects an optimal path $\pi$* among said set of paths P according to an objective function $\varphi$.

The objective function $\varphi$ is the cumulative optimization criteria on each node and/or edge of said paths.

It is to be noted that a set of valid words W is associated to an optimal path $\pi$*.

Hence, said path $\pi$* is valid according to adaptive constraints and QoS constraints, as it fulfills said input constraints, and is optimal according to the objective function $\varphi$.

**In an eighth step 8)** referenced SELEC_W*, one selects an optimal word $\omega$* of the optimal path $\pi$* according to a selection function SF.

In a not limited example, the selection function SF is the lowest number of labels $l(\pi)$. It means that the words $\omega$ with the lowest number of adaptation functions are chosen.

Hence, the selection is performed according to the set of words W associated to the optimal path $\pi$*. One compares the number of labels $l(\pi)$ (representing the adaptation functions) within the words of said set of words W, and one keeps the word which has the lowest number of labels $l(\pi)$.

Hence, it permits to find a path which minimizes the number of adaptation functions. Therefore, it permits to obtain a path for which the time processing for encapsulation/desencapsulation is minimal.

Indeed, it permits to avoid multiple chains of encapsulation/desencapsulation, as the use of adaptation functions is costly in term of time consuming and memory consuming.

In another not limited example, the selection function SF is based on the selection of determined protocol technologies tck. It means that only the words $\omega$, which comprise the adaptation functions which carry-out those determined protocol technologies tck, are kept.

Hence, with the optimal path $\pi$* and the optimal word found $\omega$*, one will be able to transfer some data or deliver a service via the nodes n and edges e of said optimal path $\pi$* using the adaptation functions of said word $\omega$*.

**Adaptation function checking MA.**

The adaptation function checking MA will now be described hereinafter. It permits to check a path built between a source node NS and another node NI according to adaptation functions.

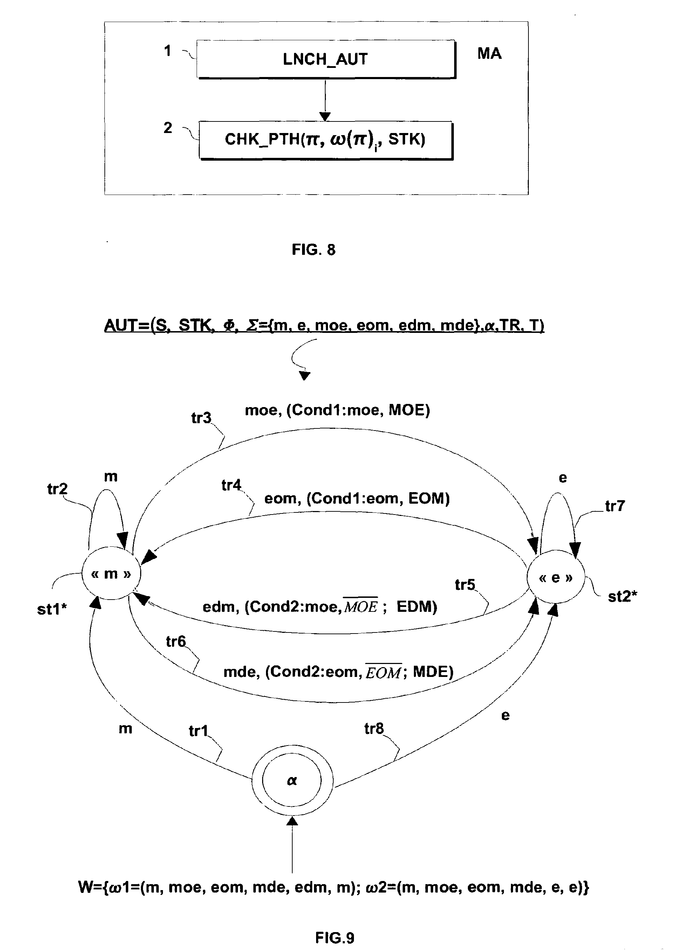

Reference to Fig. 8, 9 and 10 will be made.

The adaptation function checking MA comprises the following steps, as illustrated in Fig. 8:

- launching a push-down automaton AUT for reading a word $\omega(\pi)$ associated to the built path $\pi$, a word $\omega(\pi)$ comprising labels $l(\pi)$ of the alphabet $\Sigma$ representing protocol technologies tck and adaptation functions supported by edges and/or nodes of the network system NTW, a label $l(\pi)$ of a word $\omega(\pi)$ being associated to an edge e or a node n of the built path $\pi$ (step LNCH_AUT); and
- validating the built path $\pi$ according to the result of the reading of the word $\omega(\pi)$ (step CHK_PTH($\pi$, $\omega(\pi)$, STK), said validation comprising the sub-steps of:
- when the word $\omega(\pi)$ has been read entirely and the another node ni is different from a destination node d, validating the path $\pi$ being built with the adaptation functions corresponding to the word read $\omega(\pi)$ ;
- when the word $\omega(\pi)$ has been read entirely and the another node ni is equal to a destination node d :

  - if the source node s and the destination node d are of homogeneous protocol technologies tck and if the stack STK is empty, validating the path $\pi$ with the adaptation functions corresponding to the word read $\omega(\pi)$ ;
  - if the source node s and the destination node d are of heterogeneous protocol technologies tck and if the stack STK comprises a label representative of an adaptation function xoy, xdy, validating the path $\pi$ with the adaptation functions corresponding to the word read $\omega(\pi)$.

It is to be noted that the protocol technologies and adaptation functions are supported by nodes N and/or edges of the network system NTW, depending of a choice of model taken for the network system NTW.

It is also to be noted that the labels may be associated to an edge or to a node of the built path, depending of a choice of model taken for the push-down automaton.

As a path $\pi$ built between a source node s and another node ni is a sequence of edges E and nodes N between these two nodes s and ni, a word ω(π) may be built using the labels l(π) on the edges or the nodes belonging to said path π. Since several adaptation functions may be associated to a node and/or an edge, a path π might leads to a set of words W. Therefore in a not limited embodiment, a set of words W is read.

In the following description, protocols such as MPLS ("Multiprotocol Label Switching "), labeled "m" and Ethernet, labeled "e", are taken into a not limited example. The associated adaptation functions are:

- MPLS over Ethernet, labeled "moe", where the MPLS protocol is encapsulated in the Ethernet protocol ;
- Ethernet over MPLS, labeled "eom", where the Ethernet protocol is encapsulated in the MPLS protocol;
- Ethernet from MPLS, which is the inverse adaptation function of "moe", labeled "edm", where the Ethernet protocol is desencapsulated in the MPLS protocol ;
- MPLS from Ethernet, which is the inverse adaptation function of "eom", labeled "mde", where the MPLS protocol is desencapsulated from the Ethernet protocol.

Hence, as one can understand, in a not limited embodiment, a label l(π) of an alphabet Σ representative of an adaptation function is composed of three letters xoy, xdy, the first and third letters representing the technologies tck supported by the adaptation function, and the second letter (o or d) representing a type TY of the adaptation function, i.e. here "o" for encapsulation and "d" for desencapsulation.

Hence, in a not limited embodiment, a label l(π) of an alphabet Σ representative of a technology tck used within a node and/or an edge is composed of a single letter.

It is to be noted that the adaptation function checking MA may be used for checking an intermediate path or a final path.

An intermediate path is a path being built between the source node s and another node ni, said other node ni being in this case an intermediate node between the source node s and a destination node d to which a service has to be delivered. An intermediate path is therefore a part of a final path. Therefore, in this case, in a not limited embodiment, the validation of the built path π comprises the sub-step of, as illustrated in Fig. 8:

- when the word ω(π) has been read entirely (step 1f:OK) and the another node ni is different from a destination node nd (step 2a:OK), validating the path π being built with the adaptation functions corresponding to the word read ω(π) (step 2e: VALID(π, ω(π)$_t$)).

The checking of an intermediate path permits to stop the building of a path if one realizes that the intermediate node will not be able to communicate with the source node according to their protocols.

A final path is the end-to-end path between the source node s and another node ni, said other node ni being in this case the destination node d to which a service has to be delivered. Therefore, in this case, in a not limited embodiment, the validation of the built path π further comprises the sub-steps of, as illustrated in Fig. 9:

- when the word ω(π) has been read entirely (step 1f:OK) and the another node ni is equal to a destination node d (step 2a:NOK) :

  - if the source node s and the destination node d are of homogeneous protocol technologies tck (step 2b:OK) and if the stack STK is empty (step 2c:OK), validating the path π with the adaptation functions corresponding to the word read ω(π) (step 2e: VALID(π, ω(π)$_t$)) ;
  - if the source node s and the destination node d are of heterogeneous protocol technologies tck (step 2b:NOK) and if the stack STK comprises a label representative of an adaptation function xoy, xdy (step 2d:OK), validating the path π with the adaptation functions corresponding to the word read ω(π) (step 2e: VALID(π, ω(π)$_t$)).

Therefore, in a not limited embodiment, the validation of a path is further performed according to the state of the stack STK of said push-automaton AUT. Said stack STK is modified during the reading of the word ω(π).

In a not limited embodiment, the top entry of the stack STK is tested. If his top entry is a label representative of an adaptation function xoy, xdy one validates the path π.

The adaptation function checking MA is described in details below.

In the following, in the not limited embodiment described, the adaptation function checking MA comprises the further steps and sub-steps above-mentioned.

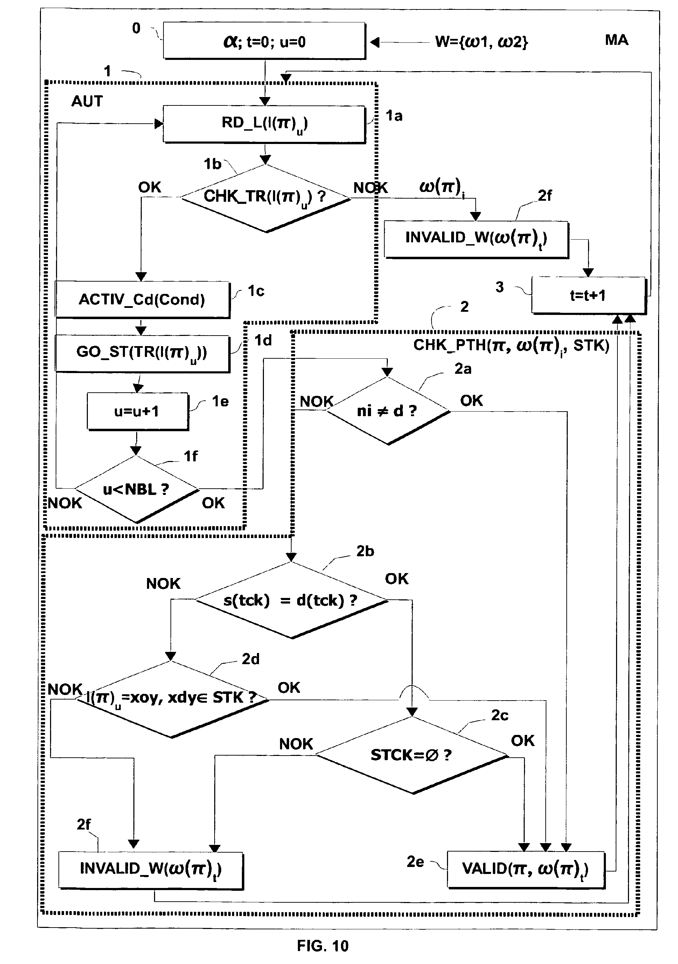

Reference to the Figs. 9 and 10 will be made.

For the following detailed description, in a not limited example given, a set of words W (associated to the built path π which is to be checked) is composed of two words ω1 and ω2 as following.

W = {ω1 = (m, moe, eom, mde, edm, m) ; ω2= (m, moe, eom, mde, e, e)}.

**In an initialization step 0)**, as illustrated in Fig. 10, one initializes a first and a second counters t and u to zero for counting respectively the number of words $\omega(\pi)$ forming the set of words W associated to the built path $\pi$, and the number of labels $1(\pi)$ within the set of words W.

As illustrated in Fig. 10, the adaptation function checking MA starts from the initial state $\alpha$ and takes as an input the set of words W.

**In a first step 1)**, as illustrated in Fig. 10, one launches a push-down automaton AUT for reading a word $\omega(\pi)$ associated to the built path $\pi$, a word $\omega(\pi)$ comprising labels $l(\pi)$ of the alphabet $\Sigma$ representing protocol technologies tck and adaptation functions supported by edges and/or nodes of the network system NTW, a label $1(\pi)$ of a word $\omega(\pi)$ being associated to an edge e or a node n of the built path $\pi$.

In the not limited example given, one reads the first word $\omega1$ (t=0).

The push-down automaton AUT is described below.

• Push-down automaton AUT

A schematic diagram of a not limited embodiment of the push-down automaton AUT is illustrated in Fig. 9.

Such a push-down automaton AUT comprises:

- the stack STK and associated stack commands $\Phi$ ;
- the alphabet $\Sigma$ of labels $1(\pi)$ representing protocol technologies and adaptation functions supported by edges E and/or nodes N of the network system NTW ;
- states st and transitions tr which are associated to the labels $l(\pi)$ of the alphabet $\Sigma$ and stack commands $\Phi$.

It also comprises an initial state $\alpha$.

It is to be noted that the set of stack commands is named $\Phi$ and a stack command is named Cd.

a) Stack commands

- When a label $1(\pi)$ of an alphabet $\Sigma$ is representative of an encapsulation adaptation function moe, eom, the push-down automaton AUT comprises a push command respectively MOE, EOM which is able to fill in the stack STK with said label $l(\pi)$ moe, eom respectively.

- When a label $1(\pi)$ of an alphabet $\Sigma$ is representative of a desencapsulation adaptation function mde, edm, the push-down automaton AUT comprises :

    - a remove command $\overline{EOM}$ , $\overline{MOE}$ which is able to remove the inverse label $1(\pi)$, respectively eom, moe, from the stack STK, and
    - a push command MDE, EDM which is able to fill in the stack STK with said label mde, edm respectively.

Hence, in the not limited example given, the following stack commands $\Phi$ are associated to the stack STK:

- MOE which fills in the stack STK with a "moe" label ;
- EOM which fills in the stack STK with a "eom" label ;
- MDE which fills in the stack STK with a "mde" label ;
- EDM which fills in the stack STK with a "edm" label ;
- $\overline{MOE}$ which removes a "moe" label from the stack STK ;
- $\overline{EOM}$ which removes an "eom" label from the stack STK.

b) States

In a not limited embodiment, each state st but the initial state $\alpha$ is labeled with a label $1(\pi)$ representing a technology tck used within a node and/or an edge of the network system NTW. In the not limited example taken, the technology tck used is the protocol supported by a node and/or an edge, here MPLS of Ethernet. The representing labels are respectively m and e. In the example of the labels m and e, one builds a state, respectively st1* and st2*, which is named with said label m and e, respectively as illustrated in Fig. 9.

c) <u>Transitions</u>

The push-down automaton AUT comprising the following transitions tr.

- for each label 1($\pi$) of an alphabet $\Sigma$ representative of an adaptation function xoy, xdy, there is a transition tr having as start state sts the first letter of said label 1($\pi$), and having as end state ste the last letter of said label 1($\pi$), and labeled with said label 1($\pi$) ;
- for each label 1($\pi$) of an alphabet $\Sigma$ representative of a technology used tck within a node and/or an edge, there is a reflexive transition tr over its corresponding state st, and labeled with said label 1($\pi$).

Hence, in the not limited example given in Fig. 9, the push-down automaton AUT comprises the following transitions.

- the transition tr1 having the start state sts=$\alpha$ (the initial state) and as end state ste=st1 *="m", and labeled tr1=m. Said transition corresponds the label m,

- the transition tr8 having the start state sts=$\alpha$ (the initial state) and as end state ste=st2*="e", and labeled tr8=e. Said transition corresponds the label e,

- the transition tr3 having the start state sts=st1*= "m" and as end state ste=st2*="e", and labeled tr3=moe. Said transition corresponds the label moe,

- the transition tr4 having the start state sts=st2*= "e" and as end state ste=st1*="m", and labeled tr4=eom. Said transition corresponds the label eom,

- the transition tr5 having the start state sts=st2*= "e" and as end state ste=st1*="m", and labeled tr5=edm. Said transition corresponds the label edm,

- the transition tr6 having the start state sts=st1*= "m" and as end state ste=st2*="e", and labeled tr6=mde. Said transition corresponds the label mde,

- a reflexive transition tr2 over its corresponding state st1*, and tr2= m. Said transition corresponds the label m,

- a reflexive transition tr7 over its corresponding state st2*, and labeled tr7 = e. Said transition corresponds the label e,

d) <u>Conditions</u>

The stack commands $\Phi$ are associated to the transitions tr according to conditions Cond which are described herein after.

- when the label 1($\pi$) labeling a transition tr is representative of an encapsulated adaptation function xoy, the corresponding stack command Cd is associated to the transition tr ;
- when the label 1($\pi$) labeling a transition tr is representative of a desencapsulation adaptation function xdy and if the top entry of the stack STK is filled in with the inverse adaptation function yox, the corresponding remove command $\overline{YOX}$ is associated to the transition tr, otherwise the corresponding push command XDY is associated to the transition tr

Hence, two conditions Cond1 and Cond2 are used.
Regarding the first condition Cond1: when the label 1($\pi$) labeling a transition tr is representative of an encapsulated adaptation function xoy, the corresponding stack command XOY is associated to the transition tr.
Hence, for the label moe, the stack command MOE is associated to the transition tr3.
For the label eom, the stack command EOM is associated to the transition tr4.
Regarding the second condition Cond2: when the label 1($\pi$) labeling a transition tr is representative of a desencapsulation adaptation function xdy and if the top entry of the stack STK is filled in with the inverse adaptation function yox, the corresponding remove command $\overline{YOX}$ is associated to the transition tr, otherwise the corresponding push command XDY is associated to the transition tr.
Hence, for the label mde, if the top entry of the stack STK is eom, the remove command $\overline{EOM}$ is associated to the transition tr6, otherwise the push command MDE is associated.
For the label edm, if the top entry of the stack STK is moe, the remove command $\overline{MOE}$ is associated to the transition tr5, otherwise the push command EDM is associated.

It is to be noted that these conditions Cond are part of the push-automaton AUT as the stack STK, the stack commands $\Phi$, the transitions tr, the states st etc. as described before.

Hence, the push-automaton AUT may be noted as AUT = {S, STK, $\Sigma$, $\Phi$, $\alpha$, TR, T), where:

S is the set of states, S={$\alpha$, "e", "m"};
$\Sigma$={m,e,meo,eom,edm,mde}, the alphabet;
$\Phi$ the stack commands, $\Phi$={MOE, EOM, MDE, EDM, $\overline{MOE}$, $\overline{EOM}$};
TR is the set of transitions tr between the states; and
T={"e","m"} the terminal states.

In order to read a word $\omega(\pi)$, the push-down automaton AUT is able to, as illustrated in Fig. 10:

- read a label $1(\pi)$ forming said word $\omega(\pi)$ (step 1 a: RD_L($1(\pi)_u$)
- check if there is a transition tr associated to the label read $1(\pi)$ (step 1b:CHK_TR($l(\pi)_u$));
- if an associated transition tr exists (step 1b:OK):

  - activate stack commands $\Phi$ on the stack STK according to the conditions Cond associated to the transition tr (step 1c: ACTIV_Cd(Cond)) ;
  - go to the egress state st* of the transition tr (step 1d:GO_ST(TR($1(\pi)_u$))); and
  - iterate the preceding steps with the next label $1(\pi)$ of the word $\omega(\pi)$ (step 1e).

These sub-steps are described in detail below.

**In a first sub-step 1a),** as illustrated in Fig. 10, one reads a label $1(\pi)$ forming said word $\omega(\pi)$.
In the not limited example given, one reads the first label "m" of the word $\omega1$ (u=0).

**In a second sub-step 1b),** as illustrated in Fig. 10, one checks if there is a transition tr associated to the label read $1(\pi)$.
In the not limited example given, there is one transition tr1 associated to the first label read "m" as illustrated in Fig. 9.

**In a third sub-step 1c),** as illustrated in Fig. 10, one activates stack commands $\Phi$ on the stack STK according to the conditions read Cond.
It is to be noted that for the initial state $\alpha$, no stack commands Cd are associated. Therefore, no stack command Cd is activated.
It is to be noted that activating stack commands leads to fill in the stack STK with a label $1(\pi)$ or to remove from the stack STK a label $1(\pi)$, as described hereinafter.

**In a fourth sub-step 1d),** as illustrated in Fig. 10, one goes to the egress state st* of the transition tr.
In the not limited example given, one goes to the egress state st1* ="m" as illustrated in Fig. 9.

**In a fifth sub-step 1e),** as illustrated in Fig. 10, one iterates the preceding sub-steps 1a) to 1d) with the next label $1(\pi)$ of the word $\omega(\pi)$.
In practical, the second counter u is increased by one.
In the not limited example given, the next label $1(\pi)$ of the word $\omega1$ is "moe" (u=1).
In the not limited example given, for this label "moe":

- there is one transition tr3 associated as illustrated in Fig. 9 (sub-step 1 b) ;
- a first condition Cond1 is associated to the transition tr3. This condition is that the label $1(\pi)$ labeling the transition tr3 is representative of an encapsulated adaptation function moe. Therefore, one activates a push command MOE which fills in the stack STK with the label "moe" (sub-step 1 c) ; and
- one goes to the egress state st2*="e" of the transition tr3 (sub-step 1d).

The following table summarizes for the first word $\omega1$ the different labels read $1(\pi)$, the associated egress state st*, the state of the stack STK, the associated stack commands $\Phi$ activated.

| $\omega1$ = (m, moe, eom, mde, edm, m) |
| --- |
| l($\pi$) read = "m"; st1*="m"; STK= {$\varnothing$} |
| l($\pi$) read = "moe"; st2*="e"; Cd=MOE; STK= {moe} |
| l($\pi$) read = "eom"; st1*="m"; Cd=EOM; STK= {eom, moe} |

(continued)

| ω1 = (m, moe, eom, mde, edm, m) |
|---|
| l($\pi$) read = "mde"; st1*="e"; Cd= $\overline{EOM}$ ; STK= {moe} |
| l($\pi$) read = "edm"; st1*="m"; Cd= $\overline{MOE}$ ; STK= {Ø} |
| l($\pi$) read = "m"; st1*="m"; Cd=Ø; STK= {Ø} |

Hence, once the first word ω1 is read by the push-automaton AUT, the stack STK is empty for the first word ω1.

When all the labels 1($\pi$) of the first word ω1 have been proceeded by the push-down automaton AUT (when a corresponding transition tr exists as explained in step 1b) (step 1f:OK; u=5<NBL=6), **in a second step 2),** one validates the built path $\pi$ according to the result of the reading of said word ω1. Furthermore, one validates the built path $\pi$ according to the associated state of a stack STK of said push-automaton AUT, said stack STK being modified during the reading of the word ω($\pi$) as described above.

It is to be noted that NBL is the total number of labels 1($\pi$) in the word ω, word which is being read.

The validation comprises the following sub-steps as illustrated in Fig. 10.

*In a first sub-step 2a:OK),* when a word ω($\pi$) has been read entirely and the another node NI is different from the destination node d, one validates the path $\pi$ being built with the adaptation functions corresponding to the word read ω($\pi$).

It is to be noted that this sub-step is performed when the path $\pi$ is being built, i.e. when it is an intermediate path, as the another node NI is different from the destination node d.

*In a second sub-step 2a:NOK),* when the word ω($\pi$) has been read entirely and the another node NI is equal to the destination node d, the following sub-steps are performed.

It is to be noted that this sub-step is performed when the path $\pi$ is a final path.

- If the source node s and the destination node d are of homogeneous protocol technologies tck (sub-step 2b:OK) and if the stack STK is empty (sub-step 2c:OK), one validates the path $\pi$ with the adaptation functions corresponding to the word read ω($\pi$) (sub-step 2e).
- If the source node s and the destination node d are of heterogeneous protocol technologies tck (sub-step 2b:NOK) and if the stack STK comprises a label representative of an adaptation function xoy, xdy (sub-step 2d:OK), one validates the path $\pi$ with the adaptation functions corresponding to the word read ω($\pi$) (sub-step 2e).

Hence, in the not limited example given of the word ω1:

- a) If the built path $\pi$ is an intermediate path.
  The first word ω1 has been read entirely. Therefore the built path $\pi$ is validated with the adaptation functions corresponding to this word, that is to say, with the adaptation functions moe, eom, mde, edm. In this case, both nodes s and d could communicate using their corresponding protocols.
- b) If the built path $\pi$ is a final path.
  The first word ω1 has been read entirely.

  o If the source node s and the destination node d are of homogeneous protocol technologies, for example MPLS, as the stack STK is empty for the first word ω1, one validates the built path $\pi$ with the first word ω1 only, and therefore with the corresponding adaptation functions moe, eom, mde, edm. In this case, both nodes s and d could communicate using their corresponding protocols.
  o If the source node NS and the destination node d are of heterogeneous protocol technologies, for example MPLS and Ethernet respectively, as the stack STK is empty for the first word ω1, no validation of the built path $\pi$ is performed with the first word ω1.

**In a third step 3),** one iterates the preceding steps 1 and 2 with said next word ω($\pi$) of the set of words W, i.e. the second word ω2.

In practical, the first counter t is increased by one (t=1) and the second counter u is reinitialized to zero. Moreover, one starts from the initial state $\alpha$.

The following table summarizes for the second word ω2 the different labels read 1($\pi$), the associated egress state st*, the state of the stack STK, the associated stack commands $\Phi$ activated.

| ω2= (m, moe, eom, mde, e,e) |
|---|
| l(π) read = "m"; st1*="m"; STK= {Ø} |
| l(π) read = "moe"; st2*="e"; Cd=MOE; STK= {moe} |
| l(π) read = "eom"; st1*="m"; Cd=EOM; STK= {eom, moe} |
| l(π) read = "mde"; st1*="e"; Cd= $\overline{EOM}$ ; STK= {moe} |
| l(π) read = "e"; st1*="e"; Cd=Ø; STK= {moe} |
| l(π) read = "e"; st1*="e"; Cd=Ø; STK= {moe} |

Hence, once the second word ω2 is read by the push-automaton AUT, the stack STK is not empty for the second word ω2 but is fill in with the label moe.

When all the labels 1(π) of the second word ω2 have been proceeded by the push-down automaton AUT (when a corresponding transition tr exists as explained in step 1b) (step 1f:OK; u=5<NBL=6), in a second step 2), one validates the built path π according to the results of the reading of said word ω2 and to the associated state of the stack STK.

The validation comprises the following sub-steps.

Hence, in the not limited example given of the word ω2:

- a) If the built path π is an intermediate path.
  The second word ω2 has been read entirely. Therefore the built path π is validated with the adaptation functions corresponding to this word, that is to say, with the adaptation functions moe, eom, mde.
- b) If the built path π is a final path.
  The second word ω2 have been read entirely.

  o If the source node s and the destination node d are of homogeneous protocol technologies, for example MPLS, as the stack STK is not empty for the second word ω2, no validation of the built path π is performed with the second word ω2.
  o If the source node s and the destination node d are of heterogeneous protocol technologies, for example MPLS and Ethernet respectively, as the stack STK is filled in with the encapsulated adaptation function "moe" for the second word ω2, one validates the built path π with the second word ω2, and therefore with the corresponding adaptation functions moe, eom, mde.

It is to be noted that in a not limited embodiment, if there is no associated transition tr associated to the label read 1(π) of a word ω(π), one iterates the preceding steps with the next word ω(π) of the set of words W (as illustrated in Fig. 10 : step 3). Thus, one stops the reading of the current word ω(π) and one goes to the next word ω(π).

It is to be noted that a built path π is validated, that means is feasible, when at least a word ω(π) of the set of word W is "validated" according to the conditions above-described.

And, a built path π is invalidated, that means is not feasible, when all the words ω(π) of the set of words W associated to said path are "invalidated" according to the conditions above-described. This means when the built path π has been validated by none of the word ω(π) of a set of words W.

In other words, a word is invalidated (step INVALID_W(ω(π))) when:

- The source node s and the destination node d are of homogeneous protocol technologies tck (sub-step 2b:OK) but the stack STK is not empty (sub-step 2c:NOK) ; or
- If the source node s and the destination node d are of heterogeneous protocol technologies tck (sub-step 2b:NOK) but the stack STK is empty (sub-step 2d:NOK).

It is to be noted that in a first not limited above-described, the validation of a built path π is performed each time a word ω(π) of the set of words W has been proceeded by the push-automaton AUT.

In a second not limited embodiment, the validation of a built path π is performed after all the words ω(π) of the set of words W have been proceeded by the push-automaton AUT. In this case, all the words read (entirely or not) are saved in a memory waiting for the step 2) to be performed. The same applied for the state of the stack STK associated to each word read ω(π).

In a not limited variant of the first and second embodiment, the step 2) of validation returns the number NBW of words ω(π) of the set of words W which have validated the path π, words which may be also called words validated. It permits to acquire a quality factor.

For example, the number NBW=2 for the case a) above-mentioned, as the two words $\omega 1$ and $\omega 2$ have been validated for the validation of the built path, and the number NBW=1 for the case b) above-mentioned, as there is only one word which has been validated for the validation of the built path (either $\omega 1$ or $\omega 2$).

This number NBW may be used in the evaluation of the first set of path P as described previously.

Therefore, the adaptation function checking MA permits to check the adaptation functions of a built path $\pi$ and to validate said path $\pi$, either for an intermediate path, or for a final path and this thanks to the push-down automaton AUT.

**Network management element.**

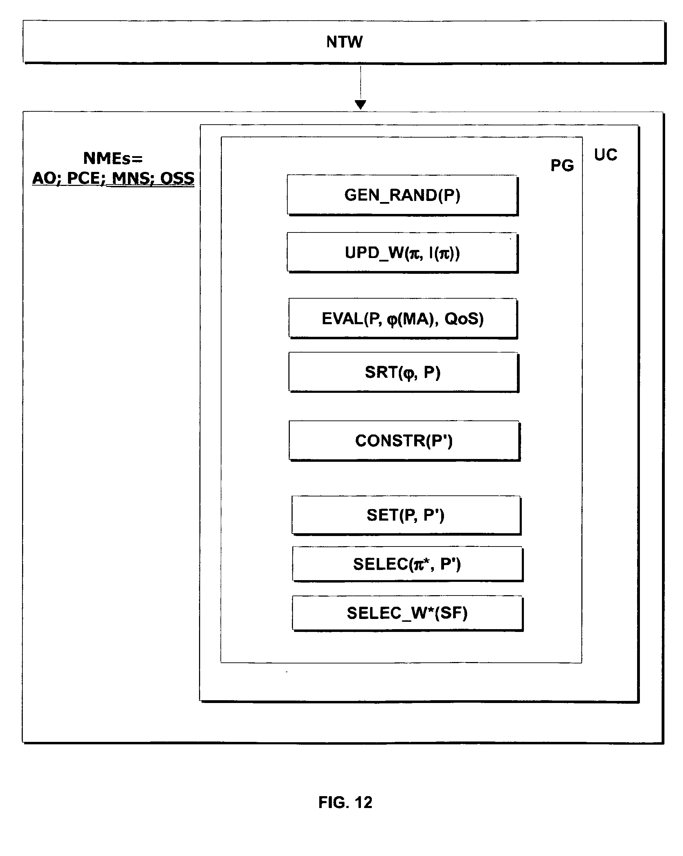

As illustrated in Fig. 12, a network management element NME for building a path $\pi$ between a source node s and a destination node d, across at least one network system NTW, under adaptation function compatibility constraint, a path $\pi$ comprising a sequence of nodes N and edges E, is able to carry out the building method M.

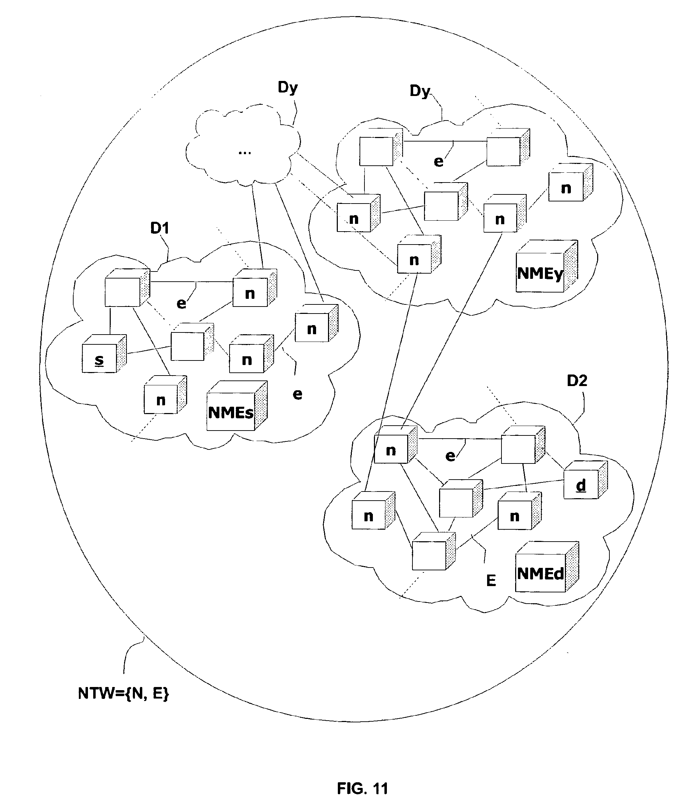

As illustrated on Fig. 11, in the not limited schematic example given, the network system NTW is a multi-domain network and is able to manage:

- a source domain D1;
- a plurality of intermediate domains Dy;
- a destination domain D2,

each comprising a plurality of nodes and one network management element NMEs, NMEy, and NMEd respectively. Of course, other architectures may be taken as examples where a domain D comprises a plurality of network management elements NME.

In this example, the network system NTW is able to manage:

- a source network management element NMEs which is within the source domain D1 comprising the source node NS ;
- intermediate network management elements NMEy which are within intermediate domains Dy between the source domain D1 and a destination domain D2, said intermediate domains Dy comprising intermediate nodes NI which are between the source node NS and the destination node ND ; and
- the destination network management element NMEd which is within the destination domain D2 comprising the destination node ND.

It is to be noted that in a not limited embodiment, a domain is a collection of network management elements NME within a common sphere of address management or computational responsibility as defined in the IETF standard. In not limited examples, a domain may be an Autonomous System (AS), an interior gateway protocol IGP routing area, or a Generalized Multiprotocol Label Switching overlay network layer.

It is to be noted that:

- An autonomous system AS usually refers to a group of routers within a network that are subject to a common authority and use the same intra-domain routing protocol.
- An area usually refers to a collection of routers that share full network topology information with each other but not necessarily with routers outside the area even those with which they share common administrative control.

The source, intermediate and destination network management elements NME are described hereinafter according to Figs. 11 to 13.

It is to be noted that a network management element NME is aware of:

- the topology of its own domain D, that is to say of how the nodes of said domain D are arranged physically altogether within said domain D, and how they communicate with one another, and what are the Traffic Engineering capabilities (e.g. maximal bandwidth, transmission delay, etc.) on their links;
- the neighbor domains Dn of its own domain D; and
- the border nodes of the neighbor domains Dn;
- the network management elements NME of its neighbor domains.

To this end, a network management element uses a database.

The method M for building a path may be used for inter-domain path computation such as in not limited examples:

- Intra-carrier case:

- in optics, when an operator network is split in multiple domains with each domain gathering transport equipments from one operator for example.
- in IP/MPLS (Internet Protocol/Multiprotocol Label Switching), when an operator network is divided into multiple domains (i.e. IGP areas) for scalability purpose.

- Inter-carrier case: where each operator NME is likely to know about its neighbors' network management element NME.

In not limited examples, a network management element NME is:

- a Network Management System, NMS ;
- a Path Computation Element, PCE as per specified in the document RFC4555 — A Path Computation Element (PCE) — based Architecture — August 2006;
- an Operational Support System, OSS; or
- an administrative owner AO which is a third party independent from the operators.

It is to be reminded that the nodes N described in a not limited example are routers. Thus, when a router NS of the domain D1 (called the source node or here a source router) wants to transmit some data to router ND of another domain D2 (called a destination node or here a destination router), it delivers a service to the destination router ND through a built path.

In another not limited example, so-called source and target nodes can also be Provider Edge (PE) or Customer Edge (CE). It is to be reminded that a PE is a router between one network service provider's area and areas administered by other network providers, whereas a CE is a router at the customer premises that is connected to the PE of a service provider network.

Therefore, the source network management element NMEs, the intermediate network management element NMEy or the destination network management element NMEd, and any other network management element NME which receives a request to deliver a service (such as a global NME which knows all the other NME), is able to (as illustrated in Fig. 12):

- generate a first set of paths P available between said source node s and said destination node d; and
- for a determined number of cycles NBI :

  - evaluate each path $\pi$ of the set of paths P according to at least one associated constraint cst which is defined by adaptation function compatibility, said evaluation setting an objective function value $\varphi va$ to each path $\pi$ according to an objective function $\varphi$ and constraint cst satisfactions;
  - sort the evaluated paths P according to said associated objective function values $\varphi va$ ;
  - construct a second set of paths P' to be evaluated by:

    - initializing said second set of paths P' using a determined factor K applied to the set of evaluated paths P ;
    - while said second set of paths P' comprises a size different from the size of the first set of paths P :

      - creating a new path $\pi'$ based on a recombination of a pair of paths $P_a$, said pair being retrieved from a group G' whose paths have at least one common node nc;
      - carrying-out a change of at least one node n or edge e of said new created path $\pi'$ with one alternative node n* or edge e* which has the maximal objective function $\varphi v(n)$, $\varphi v(e)$ value;
      - adding said new created path $\pi'$ to the second set of paths P';

  - updating said first set of paths P with the second set of paths P';

- select an optimal path $\pi*$ among said set of paths P according to the maximal objective function value $\varphi va$.

In a not limited embodiment, a network management element is further able to:

- update a set of words W associated to each generated path $\pi$ , each word being a sequence of label(s) generated using the label(s) $1(\pi)$ of said path $\pi$ nodes and/or edges; and
- during the change, updating the associated set of words W with label(s) $(1(\pi))$ of the modified new path $\pi'$.

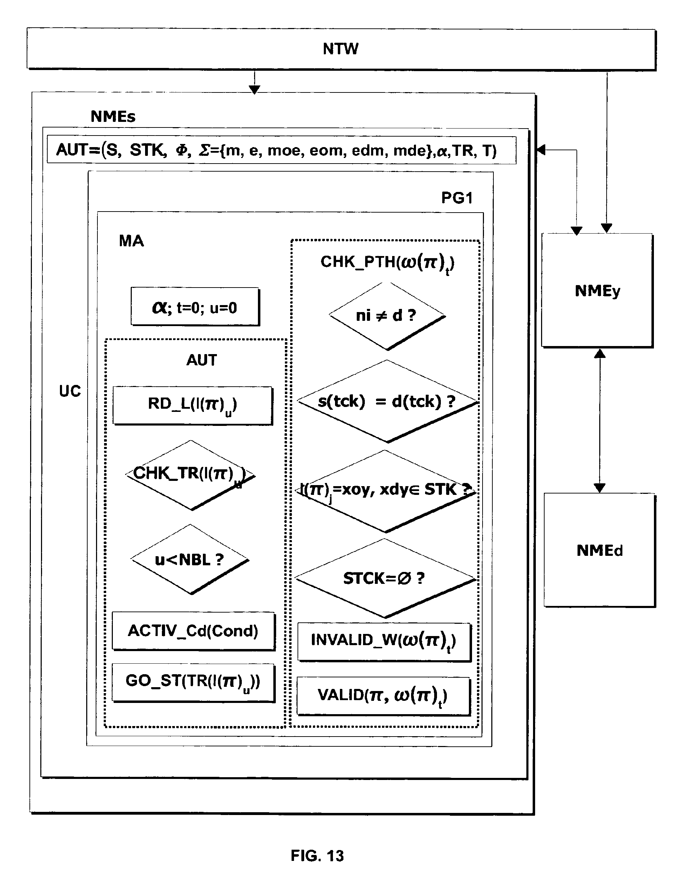

As illustrated in Fig. 13, in a not limited embodiment, a network management element NME for checking a path $\pi$ built between a source node NS and another node NI for a network system NTW, according to adaptation functions, is able to carry out the adaptation function checking MA.

Moreover, in a not limited embodiment, a network management element NME comprising the push-down automaton AUT.

Therefore, in a not limited embodiment, a network management element NME comprises in particular a control unit UC which is able to:

- launch a push-down automaton AUT for reading a word $\omega(\pi)$ associated to the path built $\pi$ between a source node s and another node ni, a word $\omega(\pi)$ comprising labels $1(\pi)$ of an alphabet $\Sigma$ representing protocol technologies tck and adaptation functions supported by edges and/or nodes of the network system NTW, a label $1(\pi)$ of a word $\omega(\pi)$ being associated to an edge e or a node n of the built path $\pi$; and
- validate the built path $\pi$ according to the result of the reading of the word $\omega(\pi)$.

In a not limited embodiment, the validation is further performed according to the state of a stack STK of said push-automaton AUT, said stack STK being modified during the reading of the word $\omega(\pi)$.

In not limited embodiments, the control unit UC is further able to perform the corresponding sub-steps of the validation as described before.

In a not limited embodiment, the control unit UC is further able to:

- read a label $1(\pi)$ forming said word $\omega(\pi)$;
- check if there is a transition tr associated to the label read $1(\pi)$ ;
- if an associated transition tr exists:

    - activate stack commands $\Phi$ on the stack STK according to the conditions Cond associated to the transition tr ;
    - go to the egress state st* of the transition tr ; and
    - iterate the preceding steps with the next label $1(\pi)$ of the word $\omega(\pi)$.

It is to be understood that the present invention is not limited to the aforementioned embodiments and variations and modifications may be made without departing from the scope of the invention. In the respect, the following remarks are made.

It is to be understood that the present invention is not limited to the aforementioned application.

The invention may be applied within a carrier network or within a trusted alliance between carriers using their own network management elements NME.

However, standardization is required when it comes to the interoperability between different operators' NMEs.

It is to be understood that the present invention is not limited to the aforementioned embodiments.

Hence, in not limited examples, other adaptation functions may be used, based on other protocol technologies, such as in not limited examples IP or the Synchronous Digital Hierarchy protocol SDH.

Hence the objective function $\varphi$ may takes into account any other optimization criterion than the adaptation functions and the QoS parameters, such as in not limited examples:

- the number of crossed nodes (between the source node and the destination node);
- the residual bandwidth, i.e. the bandwidth which is available on an edge;
- a cost rate;
- the ratio between the cumulative quality of service parameter q(a) and cost rate etc;
- a combination of the criteria above and others.

It is to be noted that the not limited example of a multi-domain network system (inter-domain or intra-domain) comprising a plurality of network management elements NME has been given, but of course the invention also applies to network system without any domains.

It is to be understood that the present invention is not limited to the aforementioned embodiments.

Hence, in not limited examples, other adaptation functions may be used, based on other protocol technologies, such as in not limited examples IP or the Synchronous Digital Hierarchy protocol SDH.

Thus, the other adaptation functions may be:

- MPLS over IP ;
- IP over MPLS ;
- Ethernet over IP ;
- IP over Ethernet;
- Synchronous Digital Hierarchy (SDH) over Ethernet ;

- Ethernet over SDH;
  the corresponding desencapsulation adaptation functions :
- IP from MPLS ;
- MPLS from IP ;
- IP from Ethernet ;
- Ethernet from IP ;
- MPLS from Ethernet ;
- Ethernet from MPLS ;
- Ethernet from SDH ;
- SDH over Ethernet.

It is to be understood that the methods and the elements according to the invention are not limited to any implementation.

There are numerous ways of implementing functions of the building method M by means of items of hardware or software, or both, provided that a single item of hardware or software can carry out several functions. It does not exclude that an assembly of items of hardware or software or both carry out a function. For example, the step of building a path may be combined with the step of updating an associated set of words, thus forming a single function without modifying the building method M in accordance with the invention.

Said hardware or software items can be implemented in several manners, such as by means of wired electronic circuits or by means of a computer program product that is suitable programmed respectively. A computer program product PG (as illustrated in Fig. 12) can be contained in a computer or in a network management element NME, said NME comprising a unit control UC, said unit control being hardware or software items as above stated.

The computer program product PG comprises a first set of instructions. Thus, said first set of instructions contained, for example, in a computer programming memory or in a network management element memory NME, may cause the computer or the network management element NME to carry out the different steps of the building method M.

The same as above-described may be applied to the adaptation function checking MA and to the push-automaton AUT. Therefore a second computer program product PG1 (as illustrated in Fig; 13) can be contained in a computer or in a network management element NME, said NME comprising a unit control UC, said unit control being hardware or software items as above stated. The computer program product PG1 comprises a second set of instructions.

Thus, said second set of instructions contained, for example, in a computer programming memory or in a network management element memory NME, may cause the computer or the network management element NME to carry out the different steps of the adaptation function checking MA.

The first and second sets of instructions may be loaded into the programming memory by reading a data carrier such as, for example, a disk.

A service provider can also make the set of instructions available via a communication network such as, for example, the Internet.

Hence, some embodiments of the invention may comprise one or a plurality of the following advantages:

- it avoids leading to unfeasible paths as the cited prior art;
- it permits to have a complete automatic procedure to check the feasibility of a path built between two nodes according to adaptation functions;
- it permits to check the final path built between a source node and a destination node, but also an intermediate path built between a source node and an intermediate node ;
- it permits to find a feasible path that allows multiple encapsulations/desencapsulations in an efficient manner ;
- it permits to find a feasible path subject to traffic engineering constraints such as adaptive constraints based on adaptation functions and QoS constraints ;
- it permits to give a solution which may be deployed within a service layer architecture to allow inter-carrier service ;
- it permits to give a solution which may be deployed within a Path Computation Element architecture to compute paths across several network domains ;
- It permits to use either a linear objective function, either a quadratic objective function, such as the variance of node transmission delays in a not limited example ;
- It permits to use objective functions using QoS parameters, but also objective functions using other parameters than QoS, such as in not limited examples the cost (e.g. energy consumption cost), the price over nodes and/or edges of a path ;
- the adaptation function checking may be dynamically set up and thus the push-down automaton may evolve in the same time as the alphabet evolves ;
- it has a runtime performance polynomial to the number of edges and nodes which better than a runtime performance exponential ; and

- it could be used with any alphabet representing functions similar to encapsulation/desencapsulation adaptation functions such as in not limited examples encryption/decryption functions.

Any reference sign in the following claims should not be construed as limiting the claim. It will be obvious that the verb "to comprise" and its conjugations do not exclude the presence of any other steps or elements beside those defined in any claim. The word "a" or "an" preceding an element or step does not exclude the presence of a plurality of such elements or steps.

**Claims**

1. Method (M) for building a path ($\pi$) between a source node (s) and a destination node (d), across at least one network system (NTW), under adaptation function compatibility constraint, said method comprising the steps of :

   - generating a first set of paths (P) available between said source node (s) and said destination node (d); and
   - for a determined number of cycles (NBI) :

      - evaluating each path ($\pi$) of the set of paths (P) according to at least one associated constraint (cst) which is defined by adaptation function compatibility, said evaluation setting an objective function value ($\varphi$va) to each path ($\pi$) according to an objective function ($\varphi$) and constraint (cst) satisfactions;
      - sorting the evaluated paths (P) according to said associated objective function values ($\varphi$va); **characterized by** the steps of:
      - constructing a second set of paths (P') to be evaluated by :

         - initializing said second set of paths (P') using a determined factor (K) applied to the set of evaluated paths (P) ;
         - while said second set of paths (P') comprises a size different from the size of the first set of paths (P) :

            - creating a new path ($\pi$') based on a recombination of a pair of paths ($P_a$), said pair being retrieved from a group (G') whose paths have at least one common node (nc);
            - carrying-out a change of at least one node (n) or edge (e) of said new created path ($\pi$') with one alternative node (n*) or edge (e*) which has the maximal objective function value ($\varphi$v(n), $\varphi$v(e));
            - adding said new created path ($\pi$') to the second set of paths (P') ;

         - updating said first set of paths (P) with said second set of paths (P') ;

      - selecting an optimal path ($\pi$*) among said set of paths (P) according to the maximal objective function value ($\varphi$va).

2. A method (M) according to the previous claim 1, wherein at least one label (l($\pi$)) is associated to each edge or each node of a generated path ($\pi$), said label(s) belonging to an alphabet ($\Sigma$) representing protocol technologies (tck) and adaptation functions supported by edges and/or nodes of the network system (NTW), and wherein it comprises the further steps of :

   - updating a set of words (W) associated to each generated path ($\pi$), each word being a sequence of label(s) generated using the label(s) (l($\pi$)) of said path ($\pi$) nodes and/or edges; and
   - during the change, updating the associated set of words (W) with label(s) (1($\pi$)) of the modified new path ($\pi$').

3. A method (M) according to the previous claim 2, wherein it comprises a further step of selecting an optimal word (w*) of the optimal path ($\pi$*) according to a selection function (SF).

4. A method (M) according to any one of the previous claim 2 or claim 3, wherein the constraint (cst) of adaptation function compatibility is checked according to an adaptation function checking (MA), said adaptation function checking being based on the set of words (W) associated to said path ($\pi$).

5. A method (M) according to any one of the previous claims, wherein the change comprises a step of selecting at least one node (n) or edge (e) according to a weight (We) defined by a number of alternative nodes or edges a node or edge has.

6. A method (M) according to any one of the previous claims 2 to 5, wherein the alternative node (n*) or edge (e*) which leads to at least one valid word ($\omega$) associated to the path ($\pi$') is selected.

7. A method (M) according to any one of the previous claims, wherein the step of evaluating the paths generated (P) is further performed according to quality of service (QoS) constraints.

8. A method (M) according to any one of the previous claims, wherein the objective function ($\varphi$) is defined by at least one quality of service (QoS) parameter.

9. A method (M) according to any one of the previous claims 2 to 8, wherein the objective function ($\varphi$) is defined by the lowest number of adaptation functions per word (w) associated to a given path.

10. A method (M) according to any one of the previous claims, wherein the creation of a new path ($\pi$') comprises the sub-steps of :

> - identifying groups (G) of evaluated paths (P), said groups being distinct from each other by at least one common node the paths belonging to a group have ;
> - among said groups (G) of evaluated paths (P), selecting a group (G') of paths ($\pi_{g'}$) which have at least one node (n) in common ;
> - selecting a pair ($P_a$) of paths (u , v) within a group (G') of paths whose paths have at least one common node (nc) ; and
> - creating a new path ($\pi$') using the node(s) (N) and edge(s) (E) between the source node (s) and the common node (nc) of a path (u) of the pair of paths ($P_a$), and using the node(s) (N) and the edge(s) (E) between the common node (nc) and the destination node (d) of the other path (v) of the pair of paths ($P_a$).

11. A method (M) according to any one of the previous claims 2 to 10, wherein the adaptation function checking (MA) uses a push-down automaton (AUT), said push-down automaton (AUT) comprising a stack (STK) and associated stack commands ($\Phi$), said alphabet ($\Sigma$), states (st) and transitions (tr) which are associated to the labels (l($\pi$)) of the alphabet ($\Sigma$) and stack commands ($\Phi$).

12. A method (M) according to any one of the previous claims 2 to 11, wherein the adaptation function checking (MA) comprises the sub-steps of :

> - launching a push-down automaton (AUT) for reading a word ($\omega(\pi)$) associated to a path built ($\pi$) between a source node (s) and an another node (ni), a word ($\omega(\pi)$) comprising labels (l($\pi$)) of the alphabet ($\Sigma$), a label (l($\pi$)) of a word ($\omega(\pi)$) being associated to an edge (e) or a node (n) of the built path ($\pi$); and
> - validating the built path ($\pi$) according to the result of the reading of the word ($\omega(\pi)$), said validation comprising the sub-steps of:
>
>> - when the word ($\omega(\pi)$) has been read entirely and the another node (ni) is different from a destination node (d), validating the path ($\pi$) being built with the adaptation functions corresponding to the word read ($\omega(\pi)$) ;
>> - when the word ($\omega(\pi)$) has been read entirely and the another node (ni) is equal to a destination node (d) :
>>
>>> - if the source node (s) and the destination node (d) are of homogeneous protocol technologies (tck) and if the stack (STK) is empty, validating the path ($\pi$) with the adaptation functions corresponding to the word read ($\omega(\pi)$) ;
>>> - if the source node (s) and the destination node (d) are of heterogeneous protocol technologies (tck) and if the stack (STK) comprises a label representative of an adaptation function (xoy, xdy), validating the path ($\pi$) with the adaptation functions corresponding to the word read ($\omega(\pi)$).

13. A method (M) according to claim 11 or claim 12, wherein the push-down automaton (AUT) comprises :

> - the stack (STK) and associated stack commands ($\Phi$) ;
> - the alphabet ($\Sigma$) of labels (l($\pi$)) representing protocol technologies (tck) and adaptation functions supported by edges and/or nodes of a network system (NTW) ;
> - states (st) and transitions (tr) which are associated to the labels (l($\pi$)) of the alphabet ($\Sigma$) and stack commands ($\Phi$);
> and is able to:

- read a label (l($\pi$)) forming said word ($\omega(\pi)$);
- check if there is a transition (tr) associated to the label read (l($\pi$));
- if an associated transition (tr) exists :

- activate stack commands ($\Phi$) on the stack (STK) according to conditions (Cond) associated to the transition (tr) ;
- go to the egress state (st*) of the transition (tr) ; and
- iterate the preceding steps with the next label (l($\pi$)) of the word ($\omega(\pi)$).

14. A network management element (NME) for building a path ($\pi$) between a source node (s) and a destination node (d), across at least one network system (NTW), under adaptation function compatibility constraint, a path ($\pi$) comprising a sequence of nodes (N) and edges (E), said network management element (NME) being able to :

- generate a first set of paths (P) available between said source node(s) and said destination node (d); and
- for a determined number of cycles (NBI) :

- to evaluate each path ($\pi$) of the set of paths (P) according to at least one associated constraint (cst) which is defined by adaptation function compatibility, said evaluation setting an objective function value ($\varphi$va) to each path ($\pi$) according to an objective function ($\varphi$) and constraint (cst) satisfactions;
- to sort the evaluated paths (P) according to said associated objective function values ($\varphi$va); **characterized in that** the network management element is adapted:
- to construct a second set of paths (P') to be evaluated by :

- initializing said second set of paths (P') using a determined factor (K) applied to the set of evaluated paths (P) ;
- while said second set of paths (P') comprises a size different from the size of the first set of paths (P) :

- creating a new path ($\pi'$) based on a recombination of a pair of paths ($P_a$), said pair being retrieved from a group (G') whose paths have at least one common node (nc);
- carrying-out a change of at least one node (n) or edge (e) of said new created path ($\pi'$) with one alternative node (n*) or edge (e*) which has the maximal objective function value ($\varphi$v(n), $\varphi$v(e));
- adding said new created path ($\pi'$) to the second set of paths (P') ;

- to update said first set of paths (P) with said second set of paths (P');

- to select an optimal path ($\pi$*) among said set of paths (P) according to the maximal objective function value ($\varphi$va).

15. A computer program product for a computer, comprising a set of instructions, which when loaded into said computer, causes the computer to carry out the method according to any one of the previous claims 1 to 13.


**Patentansprüche**

1. Verfahren (M) zum Aufbauen eines Pfades ($\pi$) zwischen einem Quellknoten (s) und einem Zielknoten (d) durch mindestens ein Netzwerksystem (NTW), unter Adaptationsfunktionskompatibilitätseinschränkungen, wobei das besagte Verfahren die folgenden Schritte umfasst:

- Erzeugen eines ersten Satzes von zwischen dem besagten Quellknoten (s) und dem besagten Zielknoten (d) verfügbaren Pfaden (P); und
- für eine vorbestimmte Anzahl von Zyklen (NBI):

- Bewerten eines jeden Pfades ($\pi$) des Satzes von Pfaden (P) gemäß mindestens einer assoziierten Einschränkung (cst), welche durch eine Adaptationsfunktionskompatibilität definiert wird, wobei die besagte Bewertung für einen jeden Pfad ($\pi$) einen Zielfunktionswert ($\varphi$va) gemäß der Erfüllung der Zielfunktion ($\varphi$) und der Einschränkung (cst) setzt;
- Sortieren der bewerteten Pfade (P) gemäß den besagten assoziierten Zielfunktionswerten ($\varphi$va); **gekennzeichnet durch** die folgenden Schritte:
- Herstellen eines anhand der folgenden Schritte zu bewertenden zweiten Satzes von Pfaden (P'):

- Initialisieren des besagten zweiten Satzes von Pfaden (P') unter Verwendung eines auf den Satz von bewerteten Pfaden (P) angewendeten festgelegten Faktors (K);
- wenn der besagte zweite Satz von Pfaden (P') eine Größe aufweist, die sich von der Größe des ersten Satzes von Pfaden (P) unterscheidet:

- Erstellen eines neuen Pfades ($\pi$') auf der Basis einer Rekombination eines Pfadpaares ($P_a$), wobei das besagte Paar aus einer Gruppe (G'), deren Pfade mindestens einen gemeinsamen Knoten (nc) aufweisen, abgerufen wird;
- Durchführen eines Austauschs mindestens eines Knotens (n) oder einer Kante (e) des besagten neu erstellten Pfades ($\pi$') mit einem alternativen Knoten (n*) oder einer alternativen Kante (e*), welche den maximalen Zielfunktionswert ($\varphi v(n)$, $\varphi < pv(e)$) aufweisen;
- Hinzufügen des neu erstellten Pfades ($\pi$') zu dem zweiten Satz von Pfaden (P');

- Aktualisieren des besagten ersten Satzes von Pfaden (P) mit dem besagten zweiten Satz von Pfaden (P');

- Auswählen eines optimalen Pfades ($\pi$*) aus dem besagten Satz von Pfaden (P) gemäß dem maximalen Zielfunktionswert ($\varphi va$).

2. Verfahren (M) nach dem vorstehenden Anspruch 1, wobei jeder Kante oder jedem Knoten eines erzeugten Pfades ($\pi$) mindestens ein Label (l($\pi$)) zugeordnet wird, wobei das besagte Label/die besagten Labels einem Alphabet ($\Sigma$), welches von Kanten und/oder Knoten des Netzwerksystems (NTW) unterstützte Protokolltechnologien (tck) und Adaptationsfunktionen darstellt, angehört/angehören, und wobei das Verfahren die folgenden weiteren Schritte umfasst:

- Aktualisieren eines einem jeden erzeugten Pfad ($\pi$) zugeordneten Satzes von Wörtern (W), wobei jedes Wort eine Folge von unter Verwendung von Labels (l($\pi$)) der Knoten und/oder Kanten des besagten Pfades ($\pi$) erzeugten Labels ist; und
- während des Austauschs, Aktualisieren des zugeordneten Satzes von Wörtern (W) mit Labels (l($\pi$)) des modifizierten neuen Pfades ($\pi$').

3. Verfahren (M) nach dem vorstehenden Anspruch 2, umfassend einen weiteren Schritt des Auswählens eines optimalen Wortes (w*) des optimalen Pfades ($\pi$*) gemäß einer Auswahlfunktion (SF).

4. Verfahren (M) nach einem beliebigen der vorstehenden Ansprüche 2 oder 3, wobei die Einschränkung (cst) der Adaptationsfunktionskompatibilität gemäß einer Adaptationsfunktionsprüfung (MA) geprüft wird, wobei die besagte Adaptationsfunktionsprüfung auf dem dem besagten Pfad ($\pi$) zugeordneten Satz von Wörtern (W) basiert.

5. Verfahren (M) nach einem beliebigen der vorstehenden Ansprüche, wobei der Austausch einen Schritt des Auswählens mindestens eines Knotens (n) oder einer Kante (e) gemäß einem durch eine Anzahl von alternativen Knoten oder Kanten definierten Gewicht (We), welches ein Knoten oder eine Kante aufweist, umfasst.

6. Verfahren (M) nach einem beliebigen der vorstehenden Ansprüche 2 bis 5, wobei der alternative Knoten (n*) oder die alternative Kante (e*), der oder die zu mindestens einem dem Pfad ($\pi$') zugeordneten gültigen Wort ($\omega$) führt, ausgewählt wird.

7. Verfahren (M) nach einem beliebigen der vorstehenden Ansprüche, wobei der Schritt des Bewertens der erzeugten Pfade (P) weiterhin gemäß Dienstgüte- bzw. QoS-Einschränkungen durchgeführt wird.

8. Verfahren (M) nach einem beliebigen der vorstehenden Ansprüche, wobei die Zielfunktion ($\varphi$) durch mindestens einen Dienstgüte- bzw. QoS-Parameter definiert wird.

9. Verfahren (M) nach einem beliebigen der vorstehenden Ansprüche 2 bis 8, wobei die Zielfunktion ($\varphi$) durch die niedrigste Anzahl von Adaptationsfunktionen pro einem gegebenen Pfad zugeordneten Wort (w) definiert wird.

10. Verfahren (M) nach einem beliebigen der vorstehenden Ansprüche, wobei die Erstellung eines neuen Pfades ($\pi$') die folgenden Teilschritte umfasst:

- Identifizieren von Gruppen (G) von bewerteten Pfaden (P), wobei sich die besagten Gruppen durch mindestens einen gemeinsamen Knoten, den die einer Gruppe angehörenden Pfade haben, voneinander unterscheiden;
- Auswählen, aus den besagten Gruppen (G) von bewerteten Pfaden (P), einer Gruppe (G') von Pfaden ($\pi_{g'}$), denen mindesten ein Knoten (n) gemeinsam ist;
- Auswählen eines Paars ($P_a$) von Pfaden (u, v) innerhalb einer Gruppe (G') von Pfaden, deren Pfade mindestens einen gemeinsamen Knoten (nc) haben; und
- Erstellen eines neuen Pfades ($\pi'$) unter Verwendung des Knotens oder der Knoten (N) und der Kante(n) (E) zwischen dem Quellknoten (s) und dem gemeinsamen Knoten (nc) eines Pfades (u) des Pfadpaars ($P_a$), und Verwenden des Knotens oder der Knoten (N) und der Kante(n) (E) zwischen dem gemeinsamen Knoten (nc) und dem Zielknoten (d) des anderen Pfades (v) des Pfadpaars ($P_a$).

11. Verfahren (M) nach einem beliebigen der vorstehenden Ansprüche 2 bis 10, wobei die Adaptationsfunktionsprüfung (MA) einen Kellerautomaten (AUT) verwendet, wobei der besagte Kellerautomat (AUT) einen Stapelspeicher (STK) und assoziierte Stapelspeicher-Kommandos ($\Phi$), das besagte Alphabet ($\Sigma$), die Zustände (st) und Transitionen (tr), welche mit den Labels (l($\pi$)) des Alphabets ($\Sigma$) und den Stapelspeicher-Kommandos ($\Phi$) assoziiert sind, umfasst.

12. Verfahren (M) nach einem beliebigen der vorstehenden Ansprüche 2 bis 11, wobei die Adaptationsfunktionsprüfung (MA) die folgenden Teilschritte umfasst:

- Starten eines Kellerautomaten (AUT) zum Lesen eines einem zwischen einem Quellknoten (s) und einem anderen Knoten (ni) aufgebauten Pfades ($\pi$) zugeordneten Wortes ($\omega$(n)), wobei ein Wort ($\omega$($\pi$)) Labels (l($\pi$)) des Alphabets ($\Sigma$) umfasst, wobei ein Label (l($\pi$)) eines Wortes ($\omega$($\pi$)) einer Kante (e) oder einem Knoten (n) des aufgebauten Pfades (($\pi$) zugeordnet ist; und
- Validieren des aufgebauten Pfades ($\pi$) gemäß dem Ergebnis des Lesens der Wortes ($\omega$($\pi$)), wobei das besagte Validieren die folgenden Teilschritte umfasst:

- Wenn das Wort ($\omega$($\pi$)) vollständig gelesen wurde und der andere Knoten (ni) ein anderer als ein Zielknoten (d) ist, Validieren des sich im Aufbau befindlichen Pfades ($\pi$) mit den Adaptationsfunktionen gemäß dem gelesenen Wort ($\omega$($\pi$));
- wenn das Wort ($\omega$($\pi$)) vollständig gelesen wurde und der andere Knoten (ni) einem Zielknoten (d) entspricht:

- Wenn der Quellknoten (s) und der Zielknoten (d) homogene Protokolltechnologien (tck) aufweisen, und wenn der Stapelspeicher (STK) leer ist, Validieren des Pfades ($\pi$) mit den Adaptationsfunktionen gemäß dem gelesenen Wort ($\omega$($\pi$));
- wenn der Quellknoten (s) und der Zielknoten (d) homogene Protokolltechnologien (tck) aufweisen, und wenn der Stapelspeicher (STK) ein Label enthält, welches für eine Adaptationsfunktion (xoy, xdy) repräsentativ ist, Validieren des Pfades ($\pi$) mit den Adaptationsfunktionen gemäß dem gelesenen Wort ($\omega$($\pi$)).

13. Verfahren (M) nach Anspruch 11 oder Anspruch 12, wobei der Kellerautomat (AUT) umfasst:

- Den Stapelspeicher (STK) und assoziierte Stapelspeicher-Kommandos ($\Phi$);
- das Alphabet ($\Sigma$) von Labels (l($\pi$)), welche von Kanten und/oder Knoten des Netzwerksystems (NTW) unterstützte Protokolltechnologien (tck) und Adaptationsfunktionen darstellen;
- Zustände (st) und Transitionen (tr), welche mit den Labels (l($\pi$)) des Alphabets ($\Sigma$) assoziiert sind, und Stapelspeicher-Kommandos ($\Phi$);
und für das Durchführen der folgenden Schritte geeignet ist:

- Lesen eines Labels (l($\pi$)), welches das besagte Wort ($\omega$($\pi$)) bildet;
- Prüfen, ob eine Transition (tr) mit dem gelesenen Label (l($\pi$)) assoziiert ist;
- wenn eine assoziierte Transition (tr) besteht:

- Aktivieren der Stapelspeicher-Kommandos ($\Phi$) auf dem Stapelspeicher (STK) gemäß mit der Transition (tr) assoziierten Bedingungen (Cond);
- Übergehen in den Ausgangszustand (st*) der Transition (tr); und
- Wiederholen der vorstehenden Schritte mit dem nächsten Label (l($\pi$)) des Wortes ($\omega$($\pi$))

14. Netzwerkverwaltungselement (NME) zum Aufbauen eines Pfades ($\pi$) zwischen einem Quellknoten (s) und einem Zielknoten (d) durch mindestens ein Netzwerksystem (NTW), unter einer Adaptationsfunktionskompatibilitätseinschränkung, wobei ein Pfad (π) eine Folge von Knoten (N) und Kanten (E) umfasst, wobei das besagte Netzwerkverwaltungselement (NME) für das Durchführen der folgenden Schritte ausgelegt ist:

- Erzeugen eines ersten Satzes von zwischen dem besagten Quellknoten (s) und dem besagten Zielknoten (d) verfügbaren Pfaden (P); und
- für eine vorbestimmte Anzahl von Zyklen (NBI):

- Bewerten eines jeden Pfades (π) des Satzes von Pfaden (P) gemäß mindestens einer assoziierten Einschränkung (cst), welche durch eine Adaptationsfunktionskompatibilität definiert wird, wobei die besagte Bewertung für einen jeden Pfad (π) einen Zielfunktionswert (φva) gemäß der Erfüllung der Zielfunktion (φ) und der Einschränkung (cst) setzt;
- Sortieren der bewerteten Pfade (P) gemäß den besagten assoziierten Zielfunktionswerten (φva); **dadurch gekennzeichnet, dass** das Netzwerkverwaltungselement für das Durchführen der folgenden Schritte ausgelegt ist:
- Herstellen eines anhand der folgenden Schritte zu bewertenden zweiten Satzes von Pfaden (P'):

- Initialisieren des besagten zweiten Satzes von Pfaden (P') unter Verwendung eines auf den Satz von bewerteten Pfaden (P) angewendeten festgelegten Faktors (K);
- wenn der besagte zweite Satz von Pfaden (P') eine Größe aufweist, die sich von der Größe des ersten Satzes von Pfaden (P) unterscheidet:

- Erstellen eines neuen Pfades (π') auf der Basis einer Rekombination eines Pfadpaares (P$_a$), wobei das besagte Paar aus einer Gruppe (G'), deren Pfade mindestens einen gemeinsamen Knoten (nc) aufweisen, abgerufen wird;
- Durchführen eines Austauschs mindestens eines Knotens (n) oder einer Kante (e) des besagten neu erstellten Pfades (π') mit einem alternativen Knoten (n*) oder einer alternativen Kante (e*), welche den maximalen Zielfunktionswert (φv(n), (φv(e)) aufweisen;
- Hinzufügen des neu erstellten Pfades (π') zu dem zweiten Satz von Pfaden (P');

- Aktualisieren des besagten ersten Satzes von Pfaden (P) mit dem besagten zweiten Satz von Pfaden (F);

- Auswählen eines optimalen Pfades (π*) aus dem besagten Satz von Pfaden (P) gemäß dem maximalen Zielfunktionswert (φva).

**15.** Computerprogramm-Produkt für einen Computer, umfassend einen Satz von Befehlen, welche nach Laden auf den besagten Computer bewirken, dass der Computer das Verfahren gemäß einem beliebigen der vorstehenden Ansprüche 1 bis 13 durchführt.

**Revendications**

**1.** Procédé (M) de création d'un chemin (π) entre un noeud source (s) et un noeud de destination (d), à travers au moins un système de réseau (NTW), selon une contrainte de compatibilité de la fonction d'adaptation, ledit procédé comprenant les étapes suivantes :

- générer un premier ensemble de chemins (P) disponible entre ledit noeud source (s) et ledit noeud de destination (d) ; et
- pour un nombre déterminé de cycles (NBI) :

- évaluer chaque chemin (π) de l'ensemble de chemins (P) conformément à au moins une contrainte (cst) associée qui est définie par la compatibilité de la fonction d'adaptation, ladite évaluation réglant une valeur de la fonction objective (φva) à chaque chemin (π) conformément à une fonction objective (φ) et aux satisfactions de contraintes (est) ;
- trier les chemins évalués (P) conformément auxdites valeurs de la fonction objective (φva) associée ;
**caractérisé par** les étapes suivantes :
- construire un second ensemble de chemins (P') à évaluer en :

- initialisant ledit second ensemble de chemins (P') en utilisant un facteur déterminé (K) appliqué à l'ensemble de chemins (P) évalué ;
- alors que ledit second ensemble de chemins (P') comprend une taille différente de la taille du premier ensemble de chemins (P) :

- créer un nouveau chemin (π') sur la base de la recombinaison d'une paire de chemins (Pa), ladite paire étant extraite d'un groupe (G') dont les chemins présentent au moins un noeud commun (nc) ;
- effectuer une modification d'au moins un noeud (n) ou un bord (e) dudit nouveau chemin créé (π') avec un noeud (n*) ou un bord (e*) alternatif qui présente la valeur maximale de la fonction objective ($\varphi v(n)$, $\varphi v(e)$) ;
- ajouter ledit nouveau chemin créé (π') au second ensemble de chemins (P') ;

- mettre à jour ledit premier ensemble de chemins (P) avec ledit second ensemble de chemins (P') ;
- sélectionner un chemin optimal (π*) parmi ledit ensemble de chemins (P) conformément à la valeur maximale de la fonction objective ($\varphi va$).

2. Procédé (M) selon la revendication 1 précédente, dans lequel au moins une étiquette (l(π)) est associée à chaque bord ou chaque noeud d'un chemin généré (π), ladite ou lesdites étiquette(s) appartenant à un alphabet (Σ) représentant des technologies de protocole (tck) et des fonctions d'adaptation prises en charge par des bords et/ou des noeuds du système de réseau (NTW), et dans lequel il comprend les étapes supplémentaires suivantes :

- mettre à jour un ensemble de mots (W) associé à chaque chemin généré (π), chaque mot étant une séquence d'étiquette(s) générées en utilisant la ou les étiquette(s) (l(π)) des noeuds et/ou des bords dudit chemin (π) ; et
- pendant la modification, mettre à jour l'ensemble de mots (W) associé avec la ou les étiquette(s) (l(π)) du nouveau chemin (π') modifié.

3. Procédé (M) selon la revendication 2 précédente, dans lequel il comprend une étape supplémentaire de sélection d'un mot optimal (w*) du chemin optimal (π*) conformément à une fonction de sélection (SF).

4. Procédé (M) selon l'une quelconque des revendications 2 ou 3 précédentes, dans lequel la contrainte (cst) de compatibilité de la fonction d'adaptation est vérifiée conformément à une vérification de la fonction d'adaptation (MA), ladite vérification de la fonction d'adaptation étant basée sur l'ensemble de mots (W) associé audit chemin (π).

5. Procédé (M) selon l'une quelconque des revendications précédentes, dans lequel la modification comprend une étape de sélection d'au moins un noeud (n) ou un bord (e) conformément à un poids (We) défini par un nombre de noeuds ou de bords alternatifs qu'un noeud ou un bord présente.

6. Procédé (M) selon l'une quelconque des revendications 2 à 5 précédentes, dans lequel le noeud (n*) ou le bord (e*) alternatif qui mène à au moins un mot valide (ω) associé au chemin (π') est sélectionné.

7. Procédé (M) selon l'une quelconque des revendications précédentes, dans lequel l'étape d'évaluation des chemins générés (P) est en outre exécutée conformément aux contraintes de qualité de service (QoS).

8. Procédé (M) selon l'une quelconque des revendications précédentes, dans lequel la fonction objective ($\varphi$) est définie par au moins un paramètre de qualité de service (QoS).

9. Procédé (M) selon l'une quelconque des revendications 2 à 8 précédentes, dans lequel la fonction objective ($\varphi$) est définie par le nombre de fonctions d'adaptation par mot (w) le plus faible associé à un chemin donné.

10. Procédé (M) selon l'une quelconque des revendications précédentes, dans lequel la création d'un nouveau chemin (π') comprend les sous-étapes suivantes :

- identifier des groupes (G) de chemins évalués (P), lesdits groupes étant distincts les uns des autres d'au moins un noeud commun que les chemins appartenant à un groupe présentent ;
- parmi lesdits groupes (G) de chemins évalués (P), sélectionner un groupe (G') de chemins ($\pi_{g'}$) qui présentent au moins un noeud (n) en commun ;
- sélectionner une paire (Pa) de chemins (u , v) au sein d'un groupe (G') de chemins dont les chemins présentent au moins un noeud commun (nc) ; et
- créer un nouveau chemin (π') en utilisant le ou les noeud(s) (N) et le ou les bord(s) (E) entre le noeud source (s) et le noeud commun (nc) d'un chemin (u) de la paire de chemins (Pa), et en utilisant le ou les noeud(s) (N) et le ou les bord(s) (E) entre le noeud commun (nc) et le noeud de destination (d) de l'autre chemin (v) de la paire de chemins (Pa).

11. Procédé (M) selon l'une quelconque des revendications 2 à 10 précédentes, dans lequel la vérification de la fonction d'adaptation (MA) utilise un automate à pile (AUT), ledit automate à pile (AUT) comprenant une pile (STK) et des commandes de piles (Φ) associées, ledit alphabet (Σ), les états (st) et les transitions (tr) qui sont associés aux étiquettes (l(π)) de l'alphabet (Σ) et aux commandes de piles (Φ)).

12. Procédé (M) selon l'une quelconque des revendications 2 à 11 précédentes, dans lequel la vérification de la fonction d'adaptation (MA) comprend les sous-étapes suivantes :

- exécuter un automate à pile (AUT) pour lire un mot (ω(π)) associé à un chemin créé (π) entre un noeud source (s) et un autre noeud (ni), un mot (ω(π)) comprenant des étiquettes (l(π)) de l'alphabet (Σ), une étiquette (l(π)) d'un mot (ω(π)) étant associée à un bord (e) ou à un noeud (n) du chemin créé (π) ; et
- valider le chemin créé (π) conformément au résultat de la lecture du mot (ω(π)), ladite validation comprenant les sous-étapes suivantes :

- lorsque le mot (ω(π)) a été entièrement lu et que l'autre noeud (ni) est différent d'un noeud de destination (d), valider le chemin (π) créé avec les fonctions d'adaptation correspondant au mot lu (ω(π)) ;
- lorsque le mot (ω(π)) a été entièrement lu et que l'autre noeud (ni) est égal à un noeud de destination (d) :

- si le noeud source (s) et le noeud de destination (d) sont de technologies de protocole homogènes (tck) et si la pile (STK) est vide, valider le chemin (π) avec les fonctions d'adaptation correspondant au mot lu (ω(π)) ;
- si le noeud source (s) et le noeud de destination (d) sont de technologies de protocole hétérogènes (tck) et si la pile (STK) comprend une étiquette représentative d'une fonction d'adaptation (xoy, xdy), valider le chemin (π) avec les fonctions d'adaptation correspondant au mot lu (ω(π)) ;

13. Procédé (M) selon la revendication 11 ou 12, dans lequel l'automate à pile (AUT) comprend :

- la pile (STK) et des commandes de piles (Φ) associées ;
- l'alphabet (Σ) d'étiquettes (l(π)) représentant des technologies de protocole (tck) et des fonctions d'adaptation prises en charge par des bords et/ou des noeuds d'un système de réseau (NTW) ;
- des états (st) et des transitions (tr) qui sont associés aux étiquettes (l(π)) de l'alphabet (Σ) et aux commandes de piles (Φ);

et peut :

- lire une étiquette (l(π)) formant ledit mot (ω(π)) ;
- vérifier s'il existe une transition (tr) associée à l'étiquette lue (l(π)) ;
- si une transition (tr) associée existe :

- activer des commandes de piles (Φ) sur la pile (STK) conformément aux conditions (Cond) associées à la transition (tr) ;
- passer à l'état de sortie (st*) de la transition (tr) ; et

- répéter les étapes précédentes avec l'étiquette (l(π)) suivante du mot (ω(π)).

14. Élément de gestion de réseau (NME) pour créer un chemin (π) entre un noeud source (s) et un noeud de destination (d), à travers au moins un système de réseau (NTW), conformément à une contrainte de compatibilité de la fonction d'adaptation, un chemin (π) comprenant une séquence de noeuds (N) et de bords (E), ledit élément de gestion de réseau (NME) pouvant :

- générer un premier ensemble de chemins (P) disponible entre ledit noeud source (s) et ledit noeud de destination (d), et
- pour un nombre déterminé de cycles (NBI) :

- évaluer chaque chemin ($\pi$) de l'ensemble de chemins (P) conformément à au moins une contrainte (cst) associée qui est définie par la compatibilité de la fonction d'adaptation, ladite évaluation réglant une valeur de la fonction objective ($\varphi$va) à chaque chemin ($\pi$) conformément à une fonction objective ($\varphi$) et aux satisfactions de contraintes (cst) ;
- trier les chemins évalués (P) conformément auxdites valeurs de la fonction objective ($\varphi$va) associée ;
**caractérisé en ce que** l'élément de gestion de réseau est adapté :
- pour construire un second ensemble de chemins (P') à évaluer en :

- initialisant ledit second ensemble de chemins (P') en utilisant un facteur déterminé (K) appliqué à l'ensemble de chemins (P) évalué ;
- alors que ledit second ensemble de chemins (P') comprend une taille différente de la taille du premier ensemble de chemins (P) :

- créer un nouveau chemin ($\pi$') sur la base de la recombinaison d'une paire de chemins (Pa), ladite paire étant extraite d'un groupe (G') dont les chemins présentent au moins un noeud commun (nc) ;
- effectuer une modification d'au moins un noeud (n) ou un bord (e) dudit nouveau chemin créé ($\pi$') avec un noeud (n*) ou bord (e*) alternatif qui présente la valeur maximale de la fonction objective ($\varphi$v(n), $\varphi$v(e)) ;
- ajouter ledit nouveau chemin créé ($\pi$') au second ensemble de chemins (P') ;

- mettre à jour ledit premier ensemble de chemins (P) avec ledit second ensemble de chemins (P') ;
- sélectionner un chemin optimal ($\pi$*) parmi ledit ensemble de chemins (P) conformément à la valeur maximale de la fonction objective ($\varphi$va).

**15.** Produit de programme informatique pour un ordinateur, comprenant un ensemble d'instructions qui, lorsqu'elles sont chargées dans ledit ordinateur, entraînent l'exécution par l'ordinateur du procédé selon l'une quelconque des revendications 1 à 13 précédentes.

FIG. 1

FIG.2

EVAL(P, φ(MA), QoS)

SETVAL(φva, π) — 3a

3

**FIG. 3**

IDENTF(G, nc) — i

SELEC_RAND(G, G', nc) — ii

SELEC_RAND(Pa(u,v), G', nc) — iii

CREAT(π', Pa(u, v)) — iv

5b

**FIG. 4**

**FIG. 5**

**FIG. 6**

**FIG. 7**

FIG. 8

AUT=(S, STK, Φ, Σ={m, e, moe, eom, edm, mde},α,TR, T)

W={ω1=(m, moe, eom, mde, edm, m); ω2=(m, moe, eom, mde, e, e)}

FIG.9

**0** $\alpha$; t=0; u=0 ← W={$\omega$1, $\omega$2} MA

**1** AUT

RD_L(l($\pi$)$_u$) **1a**

**1b** CHK_TR(l($\pi$)$_u$) ? 
OK / NOK

$\omega(\pi)_i$

INVALID_W($\omega(\pi)_t$) **2f**

ACTIV_Cd(Cond) **1c**

**3** t=t+1

GO_ST(TR(l($\pi$)$_u$)) **1d**

**2** CHK_PTH($\pi$, $\omega(\pi)_i$, STK)

u=u+1 **1e**

**2a** ni ≠ d ?
NOK / OK

**1f** u<NBL ?
NOK / OK

**2b** s(tck) = d(tck) ?
NOK / OK

**2d** l($\pi$)$_u$=xoy, xdy∈ STK ?
NOK / OK

**2c** STCK=∅ ?
NOK / OK

INVALID_W($\omega(\pi)_t$) **2f**

VALID($\pi$, $\omega(\pi)_t$) **2e**

**FIG. 10**

FIG. 11

NTW

NMEs=
AO; PCE; MNS; OSS

UC

PG

GEN_RAND(P)

UPD_W($\pi$, I($\pi$))

EVAL(P, $\varphi$(MA), QoS)

SRT($\varphi$, P)

CONSTR(P')

SET(P, P')

SELEC($\pi^*$, P')

SELEC_W*(SF)

FIG. 12

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1895720 A1